(19) Europäisches Patentamt
European Patent Office
Office européen des brevets

(11) Veröffentlichungsnummer: **0 472 564 B1**

(12) **EUROPÄISCHE PATENTSCHRIFT**

(45) Veröffentlichungstag der Patentschrift: **21.09.94**

(51) Int. Cl.5: **C07F 9/6571**, C08K 5/5393, C07F 9/48

(21) Anmeldenummer: **90907020.3**

(22) Anmeldetag: **16.05.90**

(86) Internationale Anmeldenummer:
**PCT/EP90/00787**

(87) Internationale Veröffentlichungsnummer:
**WO 90/14349 (29.11.90 90/27)**

# (54) NEUE PHOSPHONIGSÄURE-ARYLESTER, EIN VERFAHREN ZU IHRER HERSTELLUNG UND DEREN VERWENDUNG ZUR STABILISIERUNG VON KUNSTSTOFFEN, INSBESONDERE POLYOLEFINFORMMASSEN.

(30) Priorität: **20.05.89 DE 3916502**
**15.07.89 DE 3923492**
**05.05.90 DE 4014428**

(43) Veröffentlichungstag der Anmeldung:
**04.03.92 Patentblatt 92/10**

(45) Bekanntmachung des Hinweises auf die Patenterteilung:
**21.09.94 Patentblatt 94/38**

(84) Benannte Vertragsstaaten:
**AT BE CH DE ES FR GB IT LI NL**

(56) Entgegenhaltungen:
**EP-A- 0 128 229**
**DE-A- 2 834 871**
**FR-A- 2 562 543**

**Derwent Japanese Patents, week S20 see abstract 33364S & JP, A, 7117896 (MITSUBISHI RAYON CO. LTD) 19 May 1971**

(73) Patentinhaber: **HOECHST AKTIENGESELLSCHAFT**

**D-65926 Frankfurt (DE)**

(72) Erfinder: **BÖHSHAR, Manfred**
**Im Förstergrund 14**
**D-6233 Kelkheim (DE)**
Erfinder: **KLEINER, Hans-Jerg**
**Altkönigstrasse 11a**
**D-6242 Kronberg (DE)**
Erfinder: **PFAHLER, Gerhard**
**Karlsbader Strasse 27**
**D-8900 Augsburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

Journal of Molecular Catalysis, vol. 48, No. 1, 17 October 1988, Elsevier Sequoia S.A., (Lausanne, CH), W. Hartmann et al.: "Ligand property and ligand concentration control in the oligomerisation of 3-methyl-1-butyn-3-ol with Ni(CO)4 and P-Logands as the catalytic system"; see compound 28; table 3

Soviet Inventions Illustrated, section CH: Chemical, week E46, 5 January 1983, Derwent Publications Ltd, (London GB), see abstract & SU, A, 897797 (Polymer Prod. Res.) 7 april 1980

## Beschreibung

Die vorliegende Erfindung betrifft neue Phosphonigsäure-diarylester sowie Diphosphonigsäure-tetraarylester, ein Verfahren zu ihrer Herstellung und deren Verwendung zur Stabilisierung von Kunststoffen, insbesondere von Polyolefinen.

Es ist bekannt, daß synthetische Polymere gegen unerwünschte oxydative, thermische und photochemische Schädigung während der Herstellung, der Verarbeitung und des Gebrauchs durch Stabilisatoren oder Stabilisatorsysteme geschützt werden müssen. Solche Stabilisatoren bestehen beispielsweise aus einem phenolischen Antioxydans, das insbesondere die Langzeit-Gebauchsstabilität des Fertigteils gewährleisten soll und einem oder mehreren Costabilisatoren, die die Verarbeitungsstabilität regeln und teilweise auch die Wirkung der phenolischen Komponente synergistisch verstärken.

Zu den gebräuchlichen Stabilisatoren gehören ortho-alkylierte Arylphosphite und Phosphonite, wobei sich letztere vor allem durch eine weitgehende Stabilität gegen Hydrolyse auszeichnen.

Es ist aus der EP-PS 5447 (= US-PS 4 406 842 und 4 474 914 = Jap OS 79-141 753) bekannt, daß ortho-alkylierte Phenylphosphonite der Formel

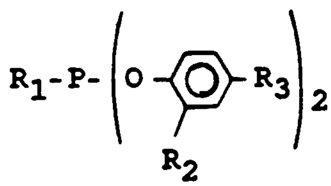

durch Umsetzung von Alkyl- bzw. Aryl-phosphonigsäure-dichloriden mit ortho-alkylierten Phenolen in Gegenwart mindestens stöchiometrischer Mengen einer geeigneten Base zur Neutralisation der entstehenden Salzsäure hergestellt werden können. Zwar werden die in dieser Patentschrift angegebenen allgemeinen Definitionen dahingehend spezifiziert, daß innerhalb bevorzugter engerer Definitionen für die Reste $R_1$, $R_2$ und $R_3$ der Rest $R_1$ Phenyl, o-, m-, p-Tolyl, o-, m-, p-Xylyl, Mesityl, o-Cumyl, p-tert.-Butylphenyl, 2,4-Di-tert.-butyl-phenyl, 2,4,6-Tri-tert.-butylphenyl, oder 2,4-Di-tert.-octyl-phenyl, $R_2$ tert.-Butyl, tert.-Amyl, tert.-Octyl, tert.-Octadecyl und $R_3$ H, Methyl, i-Propyl, tert.-Butyl, tert.-Amyl, n-Hexyl, tert.-Octyl, tert.-Dodecyl oder n-Octadecyl, $\alpha$-Methylbenzyl oder $\alpha,\alpha$-Dimethylbenzyl sein kann; von den hieraus möglichen Kombinationen werden jedoch nur zwei Ausführungsbeispiele mit $R_1$ = Phenyl und $R_2$ und $R_3$ zugleich tert.-Butyl oder tert.-Octyl angegeben, und darüberhinaus 6 Tabellenbeispiele, von denen in dreien ebenfalls $R_1$ Phenyl ist und entweder $R_2$ tert.-Octyl und $R_3$ Methyl oder $R_2$ tert.-Butyl und $R_3$ Wasserstoff oder $R_2$ und $R_3$ zugleich $\alpha,\alpha$-Dimethylbenzyl. Diese 5 Verbindungen haben demnach nicht als neu zu gelten.

Die Durchführung des Verfahrens der EP-PS 5447 ist jedoch wegen der schwierigen Herstellung der als Vorprodukte benötigten Dichlorphosphane nur in begrenztem Maße möglich, was natürlich nachteilig ist, wenn eine technische Herstellung in Betracht gezogen wird. So ist z.B. von den aromatischen Derivaten nur das Phenyl-dichlorphosphan ein technisch verfügbares Produkt, durch das einzig Derivate der benzolphosphonigen Säure zugänglich werden, was auch verständlich werden läßt, warum von den Verbindungen, in denen $R_1$ einen Arylrest darstellt, gerade nur solche mit unsubstituiertem Phenyl aufgeführt sind.

Zur Erfüllung der hohen Anforderungen, die in der Praxis an die Stabilität, Wirksamkeit, Schwerflüchtigkeit und das Wanderungsverhalten an Stabilisatoren für Polymere gestellt werden, ist es jedoch wünschenswert, gerade höher substituierte Derivate von Arylphosphonigsäuren zur Verfügung zu haben. Deren Zugänglichkeit nach bekannten Verfahren scheitert jedoch daran, daß die Vorprodukte bisher nicht wirtschaftlich herstellbar waren.

Daher sind neue Stabilisatoren mit verbesserten Eigenschaften sowie Verfahren zu deren Herstellung, die derartige Nachteile nicht aufweisen, sehr erwünscht.

Gegenstand der vorliegenden Erfindung sind nun Phosphonigsäure-arylester der Formel V (s. Formelblatt), das sind Phosphonigsäure-diarylester mit n = 1 sowie Diphosphonigsäure-tetraarylester mit n = 2, in denen A nicht existent ist - die beiden Ringe also Wasserstoff tragen - oder eine zweiwertige Kohlenwasserstoffbrücke mit 1 bis 6 Kohlenstoffatomen, die durch weiter unten unter $R^1$ genannte Gruppen substituiert sein kann, oder ein Heteroatom wie Sauerstoff oder Schwefel, Cycloalkyliden mit 4 bis 8 Kohlenstoffatomen oder Phenylalkyliden mit 7 bis 12 Kohlenstoffatomen darstellt, $R^1$ als einwertiger Rest einen Phenyl- oder Benzylrest, die 1 bis 3 Substituenten tragen, $\alpha$-Methylbenzyl, $\alpha,\alpha$-Dimethylbenzyl, oder einen 1 bis 5 Substituenten tragenden Naphthylrest darstellt, wobei die Substituenten gleich oder verschieden sind und einen nicht-aromatischen Kohlenwasserstoffrest, einen Alkoxyrest oder einen Alkylthiorest, worin die Alkylreste jeweils 1 bis 8 Kohlenstoffatome haben, Aryl oder Aryloxy mit jeweils 6 bis 10 Kohlenstoffatomen oder

Halogen mit einer Ordnungszahl von 9 bis 35 darstellen, und als zweiwertiger Rest einen Naphthylenrest, der unsubstituiert ist oder 1 bis 4 nicht-aromatische Kohlenwasserstoffreste mit jeweils 1 bis 8 Kohlenstoffatomen als Substituenten trägt, oder, wenn A nicht existent ist, einen Phenylenrest, der unsubstituiert ist oder mit bis zu 2 nicht-aromatischen Kohlenwasserstoffresten mit jeweils 1 bis 8 Kohlenstoffatomen substituiert ist, oder einen unsubstituierten Naphthylrest,
$R^2$ ein nicht-aromatischer Kohlenwasserstoffrest mit 1 bis 18 C-Atomen, Aryl, Arylmethyl, Aryläthyl oder Arylisopropyl ist, wobei das Aryl jeweils 6 bis 10 C-Atome enthält, und
$R^3$ Wasserstoff oder eine unter $R^2$ genannte Gruppe darstellt,
wobei von den Verbindungen mit n = 1, in denen $R^1$ Phenyl bedeutet, diejenigen ausgenommen sind, in denen zugleich
$R^2$ und $R^3$ jeweils tert.-Butyl,
$R^2$ tert.-Butyl und $R^3$ Wasserstoff,
$R^2$ tert.-Octyl und $R^3$ Methyl,
$R^2$ und $R^3$ jeweils tert.-Octyl und
$R^2$ und $R^3$ jeweils $\alpha,\alpha$-Dimethylbenzyl sind.

Verbindungen der Formel (V), in der A für $CH_2$ und $R_1$ für unsubstituiertes $\alpha$-Naphthyl oder Phenyl stehen, und deren Verwendung zur Stabilisierung von Chlorbutadien-Kautschuk, sind aus Soviet Inventions Illustrated Section CH., Chemical Woche E46, 5-1-83, Derwent bekannt .

Die spezielle Klasse der erfindungsgemäßen Verbindungen, in denen A nicht existent ist, hat die Formel I (s. Formelblatt), zu deren Herstellung Phosphorigsäure-diarylesterhalogenide II (s. Formelblatt) verwendet werden. In allen Fällen sind Verbindungen, in denen $R^1$ unsubstituiertes oder substituiertes Naphthyl ist, besonders bevorzugt.

In den erfindungsgemäßen Verbindungen der Formel I bedeutet $R^1$ als einwertiger Rest z.B. einen Phenyl- oder Benzylrest, die 1 bis 3 Substituenten tragen, wie den $C_1$-$C_8$-Alkyl-,$C_1$-$C_8$-Alkoxy-, $C_1$-$C_8$-Alkylthiorest, wie die unter $R^2$ im einzelnen genannten Alkylreste mit 1 bis 8 C-Atomen und die entsprechenden Alkoxy- und Alkylthioreste, oder $C_5$-$C_8$-Cycloalkyl, Phenyl, Phenoxy und/oder Halogen. Im einzelnen seien genannt die Tolyl-, Dimethylphenyl-, Trimethylphenyl-, tert.-Butylphenyl-, Anisyl-, Naphthylreste, die noch bis zu 2 Alkyl-C-Atome tragen können, sowie-die verschiedenen Biphenylreste, Benzyl, $\alpha$-Methylbenzyl und $\alpha,\alpha$-Dimethylbenzyl. Naturgemäß können die Substituenten in $R^1$ nur in einer solchen Weise kombiniert werden, daß keine sterische Hinderung auftritt. Sofern $R^1$ 3 Substituenten enthält, sollten in den beiden o-Stellungen zusammen nicht über 5 C-Atome enthalten sein.

Für $R^1$ als zweiwertiger Rest seien genannt z.B. die verschiedenen Phenylenreste, die unsubstituiert sind oder 1 bis 2 $C_1$-$C_8$, insbesondere $C_1$-$C_3$-Alkylgruppen tragen, oder die verschiedenen Naphthylenreste, die unsubstiuiert oder mit 1 bis 4 $C_1$-$C_8$-, insbesondere $C_1$-$C_3$- Alkylgruppen substituiert sind.

Als Reste $R^2$ eignen sich z.B. nicht-aromatische Kohlenwasserstoffreste mit 1 bis 18 C-Atomen, wie Alkyl oder Cycloalkyl, ferner aromatische Reste, die einschließlich aliphatischer Gruppen 6 bis 18 C-Atome aufweisen, wobei nicht mehr als 10 C-Atome Teil eines aromatischen Ringsystems sind. Bevorzugt enthalten die Reste $R^2$ 4 bis 12 und insbesondere 6 bis 10 C-Atome. Im einzelnen seien als nicht-aromatische Kohlenwasserstoffreste genannt Alkyl wie Methyl, Äthyl, die verschiedenen Propyl-, Butyl, Pentyl-, Hexyl-, Octyl-, Decyl-, Dodecyl, Hexadecyl- und Octadecylreste, und Cycloalkyl mit 5 bis 10 C-Atomen wie Cyclopentyl, Cyclohexyl, Cycloheptyl und Cyclohexylmethyl (d.i. sowohl der hydrierte Benzylrest als auch der Methylcyclohexylrest); ferner seien genannt $C_6$-$C_{10}$-Aryl, -Arylmethyl, -Aryläthyl und -Arylisopropyl, wobei der Begriff Aryl jeweils Alkylaryl einschließt, höchstens drei der unter $R^1$ genannten Substituenten trägt und, diese eingeschlossen, höchstens 14 C-Atome hat.

Wenn der Rest $R^2$ einen Alkylrest bedeutet, sind tertiäre Alkylreste mit 4-10 C-Atomen, wie tert.-Butyl, 2-Methyl-2-butyl, 2-Methyl-2-pentyl, 2-Äthyl-2-butyl besonders bevorzugt. Andere bevorzugte Verbindungen sind die, in denen $R^2$ Phenyl, Benzyl, $\alpha$-Methylbenzyl sowie $\alpha,\alpha$-Dimethylbenzyl sind.

Gegenstand der Erfindung ist auch ein Verfahren zur Herstellung von Phosphonigsäure-arylestern der Formel V, worin A zusätzlich zur oben angegebenen Bedeutung auch eine direkte Bindung sein kann, $R^1$ zusätzlich zur oben angegebenen Bedeutung auch unsubstituiertes Phenyl oder Benzyl sowie ein nicht-aromatischer Kohlenwasserstoffrest mit 1 bis 18 Kohlenstoffatomen, wie $C_1$-$C_{18}$-Alkyl sein kann, sowie in Verbindungen, in denen die beiden Phenylreste durch A verbunden sind, auch Biphenylen oder gegebenenfalls substituiertes Phenylen sein kann, und $R^2$ sowie $R^3$ die obengenannte Bedeutung haben, das dadurch gekennzeichnet ist, daß man zunächst in erster Stufe ein Kohlenwasserstoffhalogenid $R^1(\text{-Hal})_n$, worin $R^1$ die vorgenannte Bedeutung hat, n = 1 oder 2 ist und das Halogen ein Atomgewicht von mindestens 35 hat, bevorzugt jedoch Chlor oder Brom ist, unter Grignard-Bedingungen, also zweckmäßig unter inniger Durchmischung, mit mindestens molaren Mengen Magnesium zu den entsprechenden Grignard-Verbindungen $R^1(\text{MgHal})_n$ umsetzt und diese weiter in einer zweiten Stufe mit Phosphorigsäure-bis-arylesterhalogeniden der Formel VI (siehe Formelblatt), worin $R^2$, $R^3$ und Hal die obengenannte Bedeutung haben, unter Bildung der Phosphonigsäure-aryl-ester V umsetzt. Die Reaktion läßt sich beschleunigen und der Umsetzungsgrad verbessern, wenn man das Magnesium in einem kleinen Überschuß anwendet. Zweckmäßig setzt man 1,1 bis 1,5 Äquivalente Magnesium je Halogenatom um. Die Einwirkung von Ultraschall bei der Grignard-Reaktion kann zuweilen von Vorteil sein. Dieses Verfahren ist also auch zur Herstellung der Verbindungen mit $n = 1$ geeignet, die unter die Ausnahmeformulierung des Stoffanspruches fallen.

In den Verbindungen der Formel VI ist Hal bevorzugt Chlor, insbesondere bei der Herstellung von Verbindungen, in denen die beiden Phenylreste durch A verbunden sind. Das erfindungsgemäße Verfahren eignet sich also auch zur Herstellung von solchen, die Gruppe A enthaltenden Verbindungen, die aus der EP-PS 337 784, der US-PS 4 143 028 und der US-PS 4 481 317 bekannt sind. Die als Ausgangsverbindungen eingesetzten cyclischen Phosphorigsäure-diarylester-chloride der Formel VI sind in einfacher Weise aus entsprechenden Bisphenolen und Phosphortrichlorid, z.B. nach dem in der EP-OS 312 915 dargelegten Verfahren zugänglich.

Die erste Stufe des erfindungsgemäßen Verfahrens, die man an sich in jeder üblichen Weise durchführen kann, wird bevorzugt in einem aprotischen, organischen Lösungsmittel wie einem Äther, z.B Diäthyl-,-Dipropyl- oder Diisopropyläther, Äthylenglykoldimethyl- oder -diäthyläther, Diäthylenglykoldimethyl- oder -diäthyläther, Methyl-tert.-butyläther, Dioxan oder Tetrahydrofuran durchgeführt.

Da die Grignard-Verbindungen hydrolyse- und oxydationsempfindlich sind, kann es zweckmäßig sein, unter Schutzgasatmosphäre zu arbeiten. Ein solches Vorgehen ist jedoch für das Gelingen der Reaktion keineswegs zwingend. Als Schutzgas besonders geeignet sind Stickstoff und Argon.

Die Reaktionstemperatur liegt im allgemeinen zwischen 20 und 125 °C, bevorzugt jedoch zwischen 30 und 70 °C.

Zur Herstellung der Verbindungen I bzw. V wird in der zweiten Stufe die Lösung bzw. Suspension der Grignard-Verbindung zu dem Phosphorigsäure-diarylester-halogenid II bzw. VI, das vorteilhaft mit einem inerten, aprotischen Lösungsmittel, z.B. Hexan, Toluol, Xylol oder einem der obengenannten Äther verdünnt ist, zudosiert. Die Reaktionsteilnehmer werden bei diesem Schritt im allgemeinen zwischen -30 °C und +30 °C, vorzugsweise aber zwischen -20 °C und 20 °C langsam zusammengegeben. Die Umsetzung verläuft in der Regel exotherm; daher kann es zweckmäßig sein, den Reaktionsverlauf durch Kühlung zu steuern. Die günstigsten Ergebnisse werden erzielt, wenn man die Reaktionspartner in den stöchiometrischen Mengen einsetzt. Es ist jedoch auch möglich, einen Reaktionspartner im Überschuß einzusetzen; im allgemeinen sind damit aber keine besonderen Vorteile verbunden. Zweckmäßig wird gerührt, bis die Umsetzung vollständig ist, was durch Erwärmen auf 0 bis 30 °C begünstigt wird, und anschließend vom ausgefallenen Magnesiumhalogenid abgetrennt. Die Lösungsmittel können aus dem Filtrat in üblicher Weise, vorteilhaft destillativ, insbesondere unter vermindertem Druck, entfernt werden.

Die als Ausgangsstoffe benötigten Esterhalogenide II bzw. VI können in einfacher Weise aus Phosphortrichlorid und den entsprechenden Phenolen hergestellt werden (z.B US-PS 4.739.000). Die Reinheit der so gewonnenen Ausgangsmaterialien liegt bei etwa 85-90 % (lt.$^{31}$P-NMR).

Die Produkte V können nach beliebigen Verfahren aus den Rohprodukten, bevorzugt jedoch durch Kristallisation ausgesondert werden.

Die Synthese von Phosphonigsäureestern durch Umsetzung von metallorganischen Verbindungen mit Phosphorigsäure-diesterchloriden ist von verschiedenen Autoren beschrieben worden. Hier wird insbesondere auf die Notwendigkeit verwiesen, hochreine Phosphorigsäure-ester-chloride als Ausgangsmaterialien zu verwenden (Houben-Weyl, Methoden der Organischen Chemie, Band 12/1, 329, (1963)). Trotzdem lagen die Ausbeuten an Phosphonigsäure-diarylestern nur zwischen ca. 33 und 75%. Da bekannt ist, daß Estergruppen, die an das Phosphoratom gebunden sind, sich gegenüber metallorganischen Verbindungen grundsätzlich wie Halogenatome verhalten (Houben-Weyl, Methoden der Organischen Chemie, Band 12/1, 44 (1963) war es - auch wenn man entgegen üblicher Praxis nicht extrem reine Esterchloride II bzw. VII als Ausgangsmaterialien einsetzt - nicht zu erwarten, daß das vorliegende Verfahren so befriedigend und weitgehend ohne ausbeutevermindernde Konkurrenzreaktionen die Zielverbindungen liefert.

Es ist insbesondere überraschend, daß nach dem erfindungsgemäßen Verfahren die Produkte in so hoher Ausbeute und Reinheit zugänglich sind, da nach den Angaben der Jap-OS 57-46993 Phosphonigsäureester allgemein über Grignardreaktionen nur dann in wirtschaftlichen Ausbeuten zu erhalten sind, wenn nach der eigentlichen Grignard-Reaktion verschiedene Nachbehandlungsvorgänge unter Zusatz von Hilfsstoffen und unter Inertgasatmosphäre durchgeführt werden.

So ist es durch die vorliegende Erfindung möglich geworden, beliebig substituierte Phosphonigsäurearylester in einfacher Weise und hoher Ausbeute und Reinheit zu erhalten.

Gegenstand der Erfindung ist schließlich die Verwendung der Verbindungen der Formel V für sich oder in Kombination mit einem phenolischen Antioxydans zur Stabilisierung von Kunststoffen, wie Polycarbonaten, vorzugsweise Polymerisationskunststoffen wie Polyolefinen, insbesondere Polypropylen. Die Verbindungen der Formel I verleihen den Kunststoffen in den Formmassen eine verbesserte Stabilität gegen Abbau durch Licht, Sauerstoff und Wärme. Für diese Anwendung ist vielfach jedoch die Reinheit des anfallenden rohen Reaktionsprodukts (85 - 93 % lt. $^{31}P$-NMR) ausreichend. Eine Isolierung in reiner Form ist dann nicht erforderlich.

Die vorliegende Erfindung betrifft somit auch eine Kunststoff-Formmasse, enthaltend einen thermoplastischen oder duroplastischen Kunststoff und einen Phosphonigsäurearylester der Formel V im Verhältnis von (90 bis 99,99) : (0,01 bis 10), worin n 1 oder 2, A nicht existent ist - die beiden Ringe also Wasserstoff tragen - oder eine zweiwertige Kohlenwasserstoffbrücke mit 1 bis 6 Kohlenstoffatomen, die durch weiter unten unter $R^1$ genannte Gruppen substituiert sein kann, oder ein Heteroatom wie Sauerstoff oder Schwefel, Cycloalkyliden mit 4 bis 8 Kohlenstoffatomen oder Phenylalkyliden mit 7 bis 12 Kohlenstoffatomen darstellt, $R^1$ als einwertiger Rest einen Phenyl- oder Benzylrest, die 1 bis 3 Substituenten tragen, $\alpha$-Methylbenzyl, $\alpha,\alpha$-Dimethylbenzyl, oder einen 1 bis 5 Substituenten tragenden Naphthylrest darstellt, wobei die Substituenten gleich oder verschieden sein können und einen nicht-aromatischen Kohlenwasserstoffrest, einen Alkoxyrest oder einen Alkylthiorest, worin die Alkylreste jeweils 1 bis 8 Kohlenstoffatome haben, Aryl oder Aryloxy mit jeweils 6 bis 10 Kohlenstoffatomen oder Halogen mit einer Ordnungszahl von 9 bis 35 darstellen, und als zweiwertiger Rest einen Naphthylenrest, der unsubstituiert ist oder 1 bis 4 nicht-aromatische Kohlenwasserstoffreste mit jeweils 1 bis 8 Kohlenstoffatomen als Substituenten trägt, oder, wenn A nicht existent ist, einen Phenylenrest, der unsubstituiert ist oder mit bis zu zwei nicht-aromatischen Kohlenwasserstoffresten mit 1 bis 8 Kohlenstoffatomen substituiert ist, oder einen unsubstituierten Naphthylrest,
$R^2$ ein nicht-aromatischer Kohlenwasserstoffrest mit 1 bis 18 C-Atomen, Aryl, Arylmethyl, Aryläthyl oder Arylisopropyl ist, wobei das Aryl jeweils 6 bis 10 C-Atome enthält,
$R^3$ Wasserstoff oder eine unter $R^2$ genannte Gruppe darstellt,
wobei von den Verbindungen mit n = 1, in denen $R^1$ Phenyl bedeutet, diejenigen ausgenommen sind, in denen zugleich
$R^2$ und $R^3$ jeweils tert.-Butyl,
$R^2$ tert.-Butyl und $R^3$ Wasserstoff,
$R^2$ tert.-Octyl und $R^3$ Methyl,
$R^2$ und $R^3$ jeweils tert.-Octyl und
$R^2$ und $R^3$ jeweils $\alpha,\alpha$-Dimethylbenzyl sind.

Bevorzugt sind Verbindungen der Formel I, insbesondere solche, die keine Dialkylaminoreste enthalten.

Die erfindungsgemäße Kunststoff-Formmasse enthält ein thermoplastisches oder duroplastisches organisches Polymer, beispielsweise eines der nachstehend aufgeführten:

1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen wie Cyclopenten oder Norbornen.
2. Mischungen der unter 1) genannten Polymeren, z.B. von Polypropylen mit Polyäthylen oder mit Polyisobutylen.
3. Copolymere von Mono- und Diolefinen untereinander oder mit anderen Vinylmonomeren, wie Äthylen-Propylen-Copolymere, Propylen-Buten-1-Copolymere, Propylen-Isobutylen-Copolymere, Äthylen-Buten-1-Copolymere, Propylen-Butadien-Copolymere, Isobutylen-Isopren-Copolymere, Äthylen-Alkylacrylat-Copolymere, Äthylen-Alkylmethacrylat-Copolymere, Äthylen-Vinylacetat-Copolymere oder Äthylen-Acrylsäure-Copolymere und deren Salze (Ionomere), sowie Terpolymere von Äthylen mit Propylen und einem Dien, wie Hexadien, Dicyclopentadien oder Äthylidennorbornen.
4. Polystyrol.
5. Copolymere von Styrol oder $\alpha$-Methylstyrol mit Dienen oder Acrylderivaten, wie Styrol-Butadien, Styrol-Maleinsäureanhydrid, Styrol-Acrylnitril, Styrol-Äthylmethacrylat, Styrol-Butadien-Äthylacrylat, Styrol-Acrylnitril-Methylacrylat; Mischungen von hoher Schlagzähigkeit aus Styrol-Copolymeren und einem anderen Polymeren wie einem Polyacrylat, einem Dien-Polymeren oder einem Äthylen-Propylen-Dien-Terpolymeren; sowie Block-Copolymere des Styrols, wie Styrol-Butadien-Styrol, Styrol-Isopren-Styrol, Styrol-Äthylen/Butylen-Styrol oder Styrol-Äthylen/Propylen-Styrol.
6. Propfcopolymere von Styrol, wie Styrol auf Polybutadien, Styrol und Acrylnitril auf Polybutadien (ABS), Styrol und Maleinsäureanhydrid auf Polybutadien, Styrol und Alkylacrylate bzw. Alkylmethacrylate auf Polybutadien, Styrol und Acrylnitril auf Äthylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, die z.B. als sogenannte ABS-, MBS-, ASA- oder AES-Polymere bekannt sind.

7. Halogenhaltige Polymere, wie Polychloropren, Chlorkautschuk, chloriertes (CPE) oder chlorsulfoniertes Polyäthylen, Epichlorhydrin-homo- und -copolymere, insbesondere Polymere aus halogenhaltigen Vinylverbindungen, wie Polyvinylchlorid (PVC), Polyvinylidenchlorid (PVDC), Polyvinylfluorid, Polyvinylidenfluorid (PVDF); sowie deren Copolymere wie Vinylchlorid-Vinylidenchlorid, Vinylchlorid-Vinylacetat oder Vinylidenchlorid-Vinylacetat.

8. Polymere, die sich von $\alpha,\beta$-ungesättigten Carbonsäuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie Acrylnitril-Butadien-Copolymere, Acrylnitril-Alkylacrylat-Copolymere, Acrylnitril-Alkoxyacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.

11. Homo- und Copolymere von cyclischen Äthern, wie Polyäthylenglykole, Polyethylenoxyd, Polypropylenoxyd oder deren Copolymere mit Bisglycidylethern.

12. Polyacetale, wie Polyoxymethylen (POM), sowie solche Polyoxymethylene, die Comonomere wie Äthylenoxyd enthalten.

13. Polyphenylenoxyde und -sulfide.

14. Polyurethane (PUR), die sich von Polyäthern, Polyestern und Polybutadienen mit endständigen Hydroxylgruppen einerseits und aliphatischen oder aromatischen Polyisocyanaten andererseits ableiten sowie deren Vorprodukte (Polyisocyanate-Polyole-Präpolymere).

15. Polyamide und Copolyamide, die sich von Diaminen und Dicarbonsäuren und/oder von Aminocarbonsäuren oder den entsprechenden Lactamen ableiten, wie Polyamid-4, Polyamid-6, Polyamid-6/6, Polyamid-6/10, Polyamid-11, Polyamid-12, Poly-2,4,4-trimethylhexamethylenterephthalamid, Poly-m-phenylenisophthalamid, sowie deren Copolymere mit Polyäthern wie mit Polyäthylenglykol, Polypropylenglykol oder Polytetramethylenglykol.

16. Polyharnstoffe, Polyimide und Polyamid-imide.

17. Polyester, die sich von Dicarbonsäuren und Diolen und/oder von Hydroxycarbonsäuren oder den entsprechenden Lactonen ableiten, wie Polyäthylenterephthalat, Polybutylenterephthalat (PBTP), Poly-1,4-dimethylolcyclohexanterephthalat, Poly-(2,2-bis(4-hydroxyphenyl)-propan-) terephthalat, Polyhydroxybenzoate, sowie Block-Polyätherester, die sich von Polyäthylen mit Hydroxyendgruppen, Dialkoholen und Dicarbonsäuren ableiten.

18. Polycarbonate (PC).

19. Polysulfone und Polyäthersulfone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel, ableiten, wie auch deren halogenhaltige, schwerbrennbare Modifikationen.

23. Vernetzbare Acrylharze, die sich von substituierten Acrylsäureestern ableiten wie von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidyläthern oder von cycloaliphatischen Diepoxiden.

26. Natürliche Polymere, wie Cellulose, Naturkautschuk, Gelatine sowie deren polymerhomolog chemisch abgewandelte Derivate, wie Celluloseacetate, -propionate und -butyrate, bzw. die Celluloseether, wie Methylcellulose.

27. Mischungen der oben erwähnten Polymeren, wie beispielsweise PP/EPDM, Polyamid-6/EPDM oder ABS, PVC/EVA, PVC/ABS, PVC/MBS, PC/ABS, PBTP/ABS, PC/ASA, PC/PBT, PVC/CPE, PVD/Acrylat, POM/thermoplastisches PUR, POM/Acrylat, POM/MBS, Polyphenylenäther/hochschlagfestes (High Impact Strength) Polystyrol (PPE/HIPS), PPE/Polyamid-6.6 und Copolymere, PA/HDPE, PA/PP, PA/PPE.

28. Natürlich vorkommende und synthetische organische Stoffe, welche reine Monomere oder Mischungen von Monomeren sind, wie Mineralöle, tierische und pflanzliche Fette, Öle und Wachse, oder Öle, Fette und Wachse auf Basis synthetischer Ester oder Mischungen dieser Stoffe.

29. Wäßrige Dispersionen von Natur- oder Synthesekautschuk.

Das Polymere ist vorzugsweise ein Polyolefin, insbesondere Polypropylen. Der Anteil des Polymeren an der erfindungsgemäßen Formmasse beträgt 90 bis 99,99, vorzugsweise 98 bis 99,98 Gew.-%.

Als Stabilisator enthält die Formmasse einen Phosphonigsäurearylester der Formel I und gegebenenfalls ein phenolisches Antioxidans.

Das phenolische Antioxidans ist z.B. ein Ester der 3,3-Bis-(3'-t-butyl-4'-hydroxyphenyl)-butansäure der Formel III (s. Formelblatt), worin n 1 oder 2 ist und $R^4$ einen $C_1$-$C_{12}$-Alkylrest bedeutet, wenn n 1 ist, und einen $C_1$-$C_{12}$-Alkylenrest, wenn n 2 ist. Vorzugsweise ist $R^4$ ein $C_2$-$C_4$-Alkylenrest, insbesondere ein $C_2$-Alkylenrest.

Das phenolische Antioxidans kann jedoch auch ein Ester der $\beta$-(3,5-Di-t-butyl-4-hydroxy-phenyl)-propionsäure der Formel IV sein (s. Formelblatt), wobei die Alkoholkomponente ein ein- bis vierwertiger Alkohol, wie Methanol, Octadecanol, 1,6-Hexandiol, Neopentylglykol, Diäthylenglykol, Triäthylenglykol, Pentaerythrit, Tris-hydroxyäthylisocyanurat, Thiodiäthylenglykol oder Di-hydroxyäthyloxalsäurediamid ist.

Die neuen Stabilisatoren werden nach allgemein üblichen Methoden in die organischen Polymeren eingearbeitet. Die Einarbeitung kann beispielsweise durch Einmischen der Verbindungen und gegebenenfalls weiterer Additive in die Schmelze vor oder während der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösemittels kann die Einarbeitung erfolgen. Die den Polymeren zuzusetzende Menge liegt bei 0,01 bis 10, vorzugsweise 0,025 bis 5, insbesondere 0,05 bis 1,0 Gew.-%, bezogen auf das zu stabilisierende Material.

Die neuen Verbindungen können auch in Form eines Masterbatches, der diese Verbindungen beispielsweise in einer Konzentration von 1 bis 50, vorzugsweise 2,5 bis 20 Gew.-% enthält, den zu stabilisierenden Polymeren zugesetzt werden.

Zusätzlich kann die erfindungsgemäße Formmasse noch andere Antioxidantien enthalten, wie

1. **Alkylierte Monophenole**, z.B. 2,6-Di-t-butyl-4-methylphenol, -4-äthylphenol, -4-n-butylphenol, -4-i-butylphenol, 2-t-Butyl-4,6-dimethylphenol, 2,6-Di-cyclopentyl-4-methylphenol, 2-($\alpha$-Methylcyclohexyl)-4,6-dimethylphenol, 2,6-Di-octadecyl-4-methylphenol, 2,4,6-Tri-cyclohexylphenol, 2,6-Di-t-butyl-4-methoxymethylphenol;

2. **Alkylierte Hydrochinone**, wie 2,5-Di-t-butyl- und 2,5-Di-t-amyl-hydrochinon, 2,6-Di-t-butyl-4-methoxyphenol und 2,6-Diphenyl-4-octadecyloxyphenol;

3. **Hydroxylierte Thiodiphenyläther**, wie 2,2'-Thio-bis-(6-t-butyl-4-methylphenol) und -(4-octylphenol) sowie 4,4'-Thio-bis-(6-t-butyl-3-methylphenol) und -(6-t-butyl-2-methylphenol);

4. **Alkyliden-Bisphenole**, wie 2,2'-Methylen-bis-(6-t-butyl-4-methylphenol), -(6-t-butyl-4-äthylphenol), -[4-methyl-6-($\alpha$-methylcyclohexyl)-phenol], -(4-methyl-6-cyclohexylphenol), -(6-nonyl-4-methylphenol), -(4,6-di-t-butylphenol), -[6-($\alpha$-methylbenzyl)-4-nonylphenol], -[6-($\alpha$,$\alpha$-dimethylbenzyl)-4-nonylphenol], 4,4'-Methylen-bis-(2,6-di-t-butylphenol) und -(6-t-butyl-2-methylphenol), 2,2'-Äthyliden-bis-(4,6-di-t-butylphenol) und -(6-t-butyl-4-isobutylphenol), 1,1-Bis- und 1,1,3-Tris-(5-t-butyl-4-hydroxy-2-methylphenyl)-butan, 2,6-Di-(3-t-butyl-5-methyl-2-hydroxybenzyl)-4-methylphenol, 1,1-Bis-(5-t-butyl-4-hydroxy-2-methylphenyl)-3-n-dodecylmercaptobutan, Di-(3-t-butyl-4-hydroxy-5-methylphenyl)-dicyclo-pentadien;

5. **Benzylverbindungen**, wie Di-[2-(3'-t-butyl-2'-hydroxy-5'-methyl-benzyl)-6-t-butyl-4-methyl-phenyl]-terephthalat, 1,3,5-Tri-(3,5-di-t-butyl-4-hydroxybenzyl)-2,4,6-tri-methylbenzol, Di-(3,5-di-t-butyl-4-hydroxybenzyl)-sulfid, 3,5-Di-t-butyl-4-hydroxybenzyl-mercaptoessigsäure-isooctylester, Bis-(4-t-butyl-3-hydroxy-2,6-dimethylbenzyl)-dithiol-terephthalat, 1,3,5-Tris-(3,5-di-t-butyl-4-hydroxybenzyl)-iso-cyanurat, 1,3,5-Tris-(4-t-butyl-3-hydroxy-2,6-dimethylbenzyl)-isocyanurat, 3,5-Di-t-butyl-4-hydroxybenzyl-phosphonsäure-dioctadecylester und das Calciumsalz des 3,5-Di-t-butyl-4-hydroxybenzyl-phosphonsäure-mono-äthylesters;

6. **Acylaminophenole**, wie 4-Hydroxy-laurin- und -stearinsäureanilid, 2,4-Bis-octylmercapto-6-(3,5-di-t-butyl-4-hydroxy-anilino)-s-triazin und N-(3,5-di-t-butyl-4-hydroxyphenyl)-carbaminsäure-octylester;

7. **Ester der $\beta$-(5-t-butyl-4-hydroxy-3-methylphenyl)-propionsäure** mit ein- oder mehrwertigen Alkoholen, wie mit Methanol, Octadecanol, 1,6-Hexandiol, Neopentylglykol, Diäthylenglykol, Triäthylenglykol, Pentaerythrit, Tris-hydroxyäthyl-isocyanurat, Thiodiäthylenglykol oder Di-hydroxyäthyl-oxalsäurediamid;

8. **Amide der $\beta$-(3,5-Di-t-butyl-4-hydroxyphenyl)-propionsäure**, wie N,N'-Di-(3,5-di-t-butyl-4-hydroxyphenylpropionyl)-trimethylendiamin, -hexamethylendiamin und -hydrazin.

Daneben kann die erfindungsgemäße Formmasse noch weitere Additive enthalten, wie

1. UV-Absorber und Lichtschutzmittel, z.B.

1.1 **2-(2'-Hydroxymethyl)-benztriazole**, wie das 5'-Methyl-, 3',5'-Di-t-butyl-, 5'-t-Butyl-, 5'-(1,1,3,3-Tetramethylbutyl)-, 5-Chlor-3',5'-di-t-butyl-, 5-Chlor-3'-t-butyl-5'-methyl-, 3'-sec.-Butyl-5'-t-butyl-, 4'-Octoxy-, 3',5'-Di-t-amyl-, 3',5'-Bis-($\alpha$,$\alpha$-dimethylbenzyl)-Derivat;

1.2 **2-Hydroxybenzophenone**, wie das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat;

1.3 **Ester von gegebenenfalls substituierten Benzoesäuren**, wie Phenylsalicylat, 4-t-Butyl-phenylsalicylat, Octylphenylsalicyalat, Dibenzoylresorcin, Bis-(4-t-butylbenzoyl)-resorcin, Benzoylresorcin, 3,5-Di-t-butyl-4-hydroxy-benzoesäure-2,4-di-t-butylphenylester, 3,5-Di-t-butyl-4-hydroxybenzoesäurehexadecylester;

1.4 **Acrylate**, wie $\alpha$-Cyan-$\beta$,$\beta$-diphenylacrylsäure-äthylester bzw. -iso-octylester, $\alpha$-Carbomethoxy- und $\alpha$-Carbomethoxy-p-methoxy-zimtsäuremethylester, $\alpha$-Cyano-$\beta$-methyl-p-methoxy-zimtsäuremethylester bzw. -butylester, N-($\beta$-Carbomethoxy-$\beta$-cyano-vinyl)-2-methyl-indolin;

1.5 **Nickelverbindungen**, wie Nickelkomplexe des 2,2'-Thio-bis-[4-(1,1,3,3-tetra-methyl-butyl)-phenols], wie der 1:1- oder 1:2-Komplex, gegebenenfalls mit zusätzlichen Liganden wie n-Butyl-amin, Triäthanolamin oder N-Cyclohexyl-diäthanolamin, Nickelalkyl-dithiocarbamate, Nickelsalze von 4-Hydroxy-3,5-di-t-butyl-benzylphosphonsäure-mono-alkylestern wie vom Methyl- oder Äthylester, Nickelkomplexe von Ketoximen wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden;

1.6 **Sterisch gehinderte Amine**, wie

**1.6.1.** Bis-(2,2,6,6-tetramethylpiperidyl)-sebacat, -glutarat und -succinat, Bis-(1,2,2,6,6-pentamethylpiperidyl)-sebacat, -glutarat und -succinat, 4-Stearyloxy- und 4-Stearoyloxy-2,2,6,6-tetramethylpiperidin,
4-Stearyloxy- und 4-Stearoyloxy-1,2,2,6,6-pentamethyl-piperidin,
2,2,6,6-Tetramethylpiperidylbehenat,
1,2,2,6,6-Pentamethylpiperidylbehenat,
2,2,4,4-Tetramethyl-7-oxa-3,20-diazadispiro-[5.1.11.2]-heneicosan-21-on,
2,2,3,4,4-Penta-methyl-7-oxa-3,20-diaza-dispiro-[5.1.11.2]-heneicosan-21-on,
2,2,4,4-Tetramethyl-3-acetyl-7oxa-3,20-diaza-dispiro-[5.1.11.2]-heneicosan-21-on,
2,2,4,4-Tetramethyl-7-oxa-3,20-diaza-20-($\beta$-lauryloxycarbonylethyl)-21-oxo-dispiro-[5.1.11.2]-heneicosan, 2,2,3,4,4-Pentamethyl-7-oxa-3,20-diaza-20-($\beta$-lauryloxycarbonylethyl)-21-oxo-dispiro-[5.1.11.2.]-heneicosan, 2,2,4,4-Tetramethyl-3-acetyl-7-oxa-3,20-diaza-20-($\beta$-lauryloxycarbonyläthyl)-21-oxo-dispiro-[5.1.11.2]-heneicosan, 1,1',3,3',5,5'-Hexahydro-2,2',4,4',6,6'-hexaaza-2,2',6,6'-bismethano-7,8-dioxo-4,4'-bis-(1,2,2,6,6-pentamethyl-4-piperidyl)-biphenyl, N,N',N'',N'''-tetrakis-{2,4-bis-[N-(2,2,6,6-tetramethyl-4-piperidyl)-butylamino]-1,3,5-triazin-6-yl}-4,7-diazadecan-1,10-diamin, N,N',N'',N'''-tetrakis-{2,4-bis-[N-(1,2,2,6,6-pentamethyl-4-piperidyl)-butylamino]-1,3,5-triazin-6-yl}-4,7-diazadecan-1,10-diamin, N,N',N'',N'''-tetrakis-{2,4-bis-[N-(2,2,6,6-tetramethyl-4-piperidyl)-methoxypropylamino]-1,3,5-triazin-6-yl}-4,7-diazadecan-1,10-diamin, N,N',N'',N'''-tetrakis-{2,4-bis-[N-(1,2,2,6,6-pentamethyl-4-piperidyl)-methoxypropylamino]-1,3,5-triazin-6-yl}-4,7-diazadecan-1,10-diamin, Bis-(1,2,2,6,6-pentamethyl-piperidyl)-n-butyl-3,5-di-tert.-butyl-4-hydroxybenzylmalonat, Tris-(2,2,6,6-tetramethyl-4-piperidyl)-nitrilotriacetat, Tetrakis-(2,2,6,6-tetramethyl-4-piperidyl)-1,2,3,4-butantetracarbonsäure, 1,1'-(1,2-Äthandiyl)-bis-(3,3,5,5-tetramethyl-piperazinon);

**1.6.2.** Poly-N,N'-bis-(2,2,6,6-tetramethyl-4-piperidyl)-1,8-diazadecylen, Kondensationsprodukt aus 1-(2-Hydroxyethyl)-2,2,6,6-tetramethyl-4-hydroxy-piperidin und Bernsteinsäure, Kondensationsprodukt aus N,N'-bis-(2,2,6,6-tetramethyl-4-piperidyl)-hexamethylendiamin und 4-tert.-Octylamino-2,6-dichlor-1,3,5-s-triazin, Kondensationsprodukt aus N,N'-bis-(2,2,6,6-tetramethyl-4-piperidyl)-hexamethylendiamin und 4-Morpholino-2,6-dichlor-1,3,5-triazin.

Besonders vorteilhaft erweist sich dabei in vielen Fällen eine Kombination der erfindungsgemäßen Verbindungen mit den unter 1.6.1 genannten Verbindungen.

1.7 **Oxalsäurediamide**, wie 4,4'-Di-octyloxy-oxanilid, 2,2'-Di-octyloxy-5,5'-di-t-butyl-oxanilid, 2,2'-Didodecyloxy-5,5'-di-t-butyloxanilid, 2-Äthoxy-2'-äthyl-oxanilid, N,N'-Bis-(3-dimethylaminopropyl)-oxalamid, 2-Äthoxy-5-t-butyl-2'-äthyloxanilid und dessen Gemisch mit 2-Äthoxy-2'-äthyl-5,4-di-t-butyl-oxanilid, Gemische von o- und p-Methoxy- und -Äthoxy-di-substituierten Oxaniliden;

2. **Metalldesaktivatoren**, wie N,N'-Diphenyloxalsäurediamid, N-Salicylal-N'-salicyloyl-hydrazin, N,N'-Bissalicyloyl-hydrazin, N,N'-Bis-(3,5-di-t-butyl-4-hydroxyphenylpropionyl)-hydrazin, 3-Salicyloyl-amino-1,2,3-triazol, Bis-benzyliden-oxalsäuredihydrazid;

3. **Phosphite und Phosphonite**, beispielsweise Triphenylphosphit, Diphenylalkylphosphite, Phenyldialkylphosphite, Trisnonylphenylphosphit, Trilaurylphosphit, Trioctadecylphosphit, Distearyl-pentaerythrityldiphosphit, Tris(2,4-di-t-butylphenyl)phosphit, Diisodecyl-pentaerythrityl-diphosphit, Bis(2,4-di-t butylphenyl)-pentaerythrityl-diphosphit, Tristearylsorbityltriphosphit, Tetrakis-(2,4-di-t-butylphenyl)-4,4'-biphenylendiphosphonit, 3,9-Bis-(2,4-di-t-butyl-phenoxy)-2,4,8,10-tetraoxa-3,9-diphosphaspiro(5.5)-undecan, Tris(2-t-butyl-4-thio(2'-methenyl-4'-hydroxy-5'-t-butyl)-phenyl-5-methenyl)-phenylphosphit.

4. **Peroxidzerstörende Verbindungen**, wie Ester der β-Thiodipropionsäure, beispielsweise der Lauryl, Stearyl-, Myristyl- oder Tridecylester, Mercaptobenzimidazol, das Zinksalz des 2-Mercaptobenzimidazols, Zink-alkyldithiocarbamate, Dioctadecylsulfid, Dioctadecylmonosulfid, Pentaerythrittetrakis-(β-dodecylmercapto)-propionat;
5. **Basische Co-Stabilisatoren**, wie Melamin, Polyvinylpyrrolidon, Dicyandiamid, Triallylcyanurat, Harnstoff-Derivate, Hydrazin-Derivate, Amine, Polyamine, Polyurethane, Alkali- und Erdalkalisalze höherer Fettsäuren oder Phenolate, beispielsweise Ca-, Zn- und Mg-Stearat, Na-Ricinoleat, K-Palmitat, Antimon- oder Zinnbrenzcatechinat, Hydroxide und Oxide von Erdalkalimetallen oder des Aluminiums, beispielsweise CaO, MgO, ZnO;
6. **Nukleierungsmittel**, wie 4-t-Butylbenzoesäure, Adipinsäure, Diphenylessigsäure, Dibenzylidensorbit;
7. **Füllstoffe und Verstärkungsmittel**, wie Calciumcarbonat, Silikate, Glasfasern, Asbest, Talk, Kaolin, Glimmer, Bariumsulfat, Metalloxide und -hydroxide, Ruß, Graphit;
8. **Sonstige Zusätze**, wie Weichmacher, Gleitmittel, Emulgatoren, Pigmente, optische Aufheller, Flammschutzmittel, Antistatika, Treibmittel.

Die verschiedenen zusätzlichen Additive der vorgenannten Gruppen 1 bis 6 werden den zu stabilisierenden Polymeren in einer Menge von 0,01 bis 10, vorzugsweise 0,01 bis 5 Gew.-%, bezogen auf das Gesamtgewicht der Formmasse, zugesetzt. Der Mengenanteil der Additive der Gruppen 7 und 8 beträgt im allgemeinen 1 bis 80, vorzugsweise 10 bis 50 Gew.-%, bezogen auf die gesamte Formmasse.

Die erfindungsgemäß stabilisierten organischen Polymeren können in verschiedener Form angewendet werden, z.B. als Folien, Fasern, Bändchen, Profile oder als Bindemittel für Lacke, Klebstoffe oder Kitte.

In den folgenden Beispielen 1 bis 24 wurden zum Kristallisieren der erfindungsgemäß erhaltenen Verbindungen bestimmte Gemische von Lösungsmitteln verwendet. Die Angaben beziehen sich auf Volumenverhältnisse. Durch Verändern der Mischungsverhältnisse können gegebenenfalls noch Optimierungen erzielt werden.

**Beispiele für die Herstellung der Phosphonigsäure-diarylester**

Allgemeine Vorschrift für Verbindungen der Formel I

Unter Stickstoffatmosphäre und Feuchtigkeitsausschluß wurde aus 250 mmol Organobromverbindung und 250 mmol (=6,1 g) Mg-Spänen in 170 ml Tetrahydrofuran die entsprechende Grignardverbindung hergestellt. Die erhaltene Lösung bzw. Suspension wurde anschließend innerhalb von 30 - 40 min bei einer Innentemperatur von - 20 bis - 10 °C unter lebhaftem Rühren zu der Lösung von 250 mmol Phosphorigsäurediarylester-chlorid in 150 ml n-Hexan/Tetrahydrofuran (2:1) zudosiert. Anschließend ließ man die Reaktionsmischung auf Raumtemperatur erwärmen und rührte zur Vervollständigung der Umsetzung noch 2,5 Stunden. Nach Filtration vom ausgefallenen Mg-Salz wurde das Lösungsmittel zunächst im Vakuum der Wasserstrahlpumpe und dann im Hochvakuum abdestilliert und der erhaltene farblose oder hellbeige Rückstand pulverisiert und im Hochvakuum getrocknet.

Der Produktgehalt der Rohmaterialien wurde durch $^{31}$P-NMR Spektroskopie ermittelt. Er lag im allgemeinen zwischen 85 und 93 % (vom Gesamt-P). In den angegebenen Fällen wurde zur Charakterisierung des Produktes aus Acetonitril/Aceton-Gemischen kristallisiert.

1) **(2,4,6-Trimethyl-1-phenyl)-phosphonigsäure-bis-(2'4'-di-tert.-butyl-phenyl)-ester:** Ausgehend von 49,7 g Brommesitylen und 119,3 g Phosphorigsäure-bis-(2,4-di-tert.-butyl-phenyl)-ester-chlorid wurden 140 g farbloses Material vom Erweichungspunkt ca. 60 °C mit einem Gehalt von 90 % an obiger Verbindung erhalten. Kristallisieren aus Acetonitril/Aceton (15:1) lieferte farblose Kristalle vom Schmp. 95 -97 °C;

$$[^{31}\text{P-NMR: } \delta_{CDCl_3} = 168,4 \text{ ppm}].$$

| | | | | |
|---|---|---|---|---|
| $C_{37}H_{53}O_2P$ (560,8) | Ber.:<br>Gef.: | 79,24 % C,<br>78,9 % C, | 9,52 % H,<br>9,7 % H, | 5,52 %P<br>5,3 %P. |

2) **(2,4,5-Trimethyl-1-phenyl)-phosphonigsäure-bis-(2',4'-di tert.-butyl-phenyl)-ester:** Ausgehend von 49,7 g 5-Brom-1,2,4-trimethylbenzol und 119,3 g Phosphorigsäure-bis-(2,4-di-tert.-butyl-phenyl)-ester-chlorid wurden 140 g gelbliches Material mit einem Gehalt von 93 % an obiger Verbindung erhalten. Erweichungspunkt ca. 30 - 35 °C;

$$[^{31}P\text{-}NMR:\ \delta_{CDCl_3} = 155{,}4\ ppm].$$

$C_{37}H_{53}O_2P$ (560,8)

3) **(4-Tert.-butyl-phenyl)-phosphonigsäure-bis-(2',4'-di-tert.-butyl-phenyl)-ester:** Ausgehend von 53,3 g p-Brom-tert.-butyl-benzol und 119,3 g Phosphorigsäure-bis-(2,4-di-tert.-butyl-phenyl)-ester-chlorid wurden ca. 140 g farbloses Material mit einem Gehalt von 90 % an obiger Verbindung erhalten. Kristallisieren des Rohproduktes aus Acetonitril/Aceton (15:2) lieferte farblose Kristalle vom Schmp. 115-117 °C;

$$[^{31}P\text{-}NMR:\ \delta_{CDCl_3}=155{,}9\ ppm].$$

| | | | | |
|---|---|---|---|---|
| $C_{38}H_{55}O_2P$ (574,82) | Ber.:<br>Gef.: | 79,4 % C,<br>79,8 % C, | 9,64 % H,<br>9,9 % H, | 5,38 % P<br>5,0 % P. |

4) **(4-Tert.-butyl-phenyl)-phosphonigsäure-bis-(2'tert.-butyl-phenyl)-ester:** Ausgehend von 53,3 g p-Brom-tert.-butyl-benzol und 91,2 g Phosphorigsäure-bis-(2-tert.-butyl-phenyl)-ester-chlorid wurden ca. 115 g zähes Harz mit einem Gehalt von 85 % an obiger Verbindung erhalten. Kristallisieren des Rohproduktes aus Acetonitril/Aceton (2:1) lieferte farblose Kristalle vom Schmp. 95-97 °C,

$$[^{31}P\text{-}NMR:\ \delta_{CDCl_3}=155{,}9\ ppm].$$

| | | | | |
|---|---|---|---|---|
| $C_{30}H_{39}O_2P$ (462,61) | Ber.:<br>Gef.: | 77,89 % C,<br>77,5 % C, | 8,49 % H,<br>8,7 % H, | 6,69 % P<br>6,5 % P. |

5) **1-Naphthyl-phosphonigsäure-bis-(2',4'-di-tert.-butyl-phenyl)-ester:** Ausgehend von 51,8 g 1-Bromnaphthalin und 119,3 g Phosphorigsäure-bis-(2,4-di-tert.-butyl-phenyl)-ester-chlorid wurden ca. 142 g farbloser Feststoff vom Erweichungspunkt 50-55 °C und einem Gehalt von 91 % an obiger Verbindung erhalten. Kristallisieren des Rohproduktes aus Acetonitril/Aceton (5:1) lieferte farblose Kristalle vom Schmp. 125-127 °C;

$$[^{31}P\text{-}NMR:\ \delta_{CDCl_3} = 158{,}1\ ppm].$$

| | | | | |
|---|---|---|---|---|
| $C_{38}H_{49}O_2P$ (568,77) | Ber.:<br>Gef.: | 80,24 % C,<br>80,5 % C, | 8,68 % H,<br>8,5 % H, | 5,44 % P<br>5,3 % P. |

6) **(4-Methyl-1-naphthyl)-phosphonigsäure-bis-(2',4'-di-tert.-butyl-phenyl)-ester:** Ausgehend von 55,27 g 1-Brom-4-methyl-naphthalin und 119,3 g Phosphorigsäure-bis-(2,4-di-tert.-butyl-phenyl)-ester-chlorid wurden ca. 140 g beiges Material mit einem Gehalt von 93 % an obiger Verbindung erhalten. Kristallisieren aus Aceton lieferte farblose Kristalle vom Schmp. 145-146 °C;

$$[^{31}P\text{-NMR: } \delta_{CDCl_3}=159{,}0 \text{ ppm}].$$

| | | | | |
|---|---|---|---|---|
| $C_{39}H_{51}O_2P$ (582,80) | Ber.:<br>Gef.: | 80,37 %C,<br>80,7 %C, | 8,82 %H,<br>9,1 %H, | 5,31 %P<br>5,1 %P |

7) **(4-Methyl-1-naphthyl)-phosphonigsäure-bis-(2'-tert.-butyl-phenyl)-ester:** Ausgehend von 55,27 g 1-Brom-4-methyl-naphthalin und 91,2 g Phosphorigsäure-bis-(2-tert.-butyl-phenyl)-ester-chlorid wurden ca. 110 g gelbes Harz mit einem Gehalt von 90 % an obiger Verbindung erhalten;

$$[^{31}P\text{-NMR: } \delta_{CDCl_3}=158{,}4 \text{ ppm}].$$

$C_{31}H_{35}O_2P$ (470,6).

8) **(2-Methyl-1-naphthyl)-phosphonigsäure-bis-(2',4'-di-tert.-butyl-phenyl)-ester:** Ausgehend von 55,27 g 1-Brom-2-methyl-naphthalin und 119,3 g Phosphorigsäure-bis-(2,4-di-tert.-butyl-phenyl)-ester-chlorid wurden ca. 140 g gelbliches Material mit einem Gehalt von 90 % an obiger Verbindung erhalten. Kristallisieren aus Aceton/Acetonitril (2:1) lieferte farblose Kristalle vom Schmp. 157-159 °C;

$$[^{31}P\text{-NMR: } \delta_{CDCl_3}=164{,}4 \text{ ppm}].$$

| | | | | |
|---|---|---|---|---|
| $C_{39}H_{51}O_2P$ (582,80) | Ber.:<br>Gef.: | 80,37 %C,<br>79,9 %C, | 8,82 %H,<br>9,1 %H, | 5,31 %P<br>5,1 %P. |

9) **2-Naphthyl-phosphonigsäure-bis-(2',4'-di-tert.-butyl-phenyl)-ester:** Ausgehend von 51,8 g 2-Bromnaphthalin und 119,3 g Phosphorigsäure-bis-(2,4-di-tert.-butyl-phenyl)-ester-chlorid wurden ca. 143 g farbloser Feststoff mit einem Gehalt von 94% an obiger Verbindung erhalten. Kristallisieren des Rohproduktes aus Acetonitril/Aceton (9:1) lieferte farblose Kristalle vom Schmp 133-135 °C;

$$[^{31}P\text{-NMR: } \delta_{CDCl_3}= 155{,}0 \text{ ppm}].$$

| | | | | |
|---|---|---|---|---|
| $C_{38}H_{49}O_2P$ (568,77) | Ber.:<br>Gef.: | 80,24 % C,<br>80,4 % C, | 8,68 % H,<br>8,9 % H, | 5,44 % P<br>5,2 % P. |

10) **(6-Methoxy-2-naphthyl)-phosphonigsäure-bis-(2',4'-di-tert.-butyl-phenyl)-ester:** Ausgehend von 59,3 g 2-Brom-6-methoxy-naphthalin und 119,3 g Phosphorigsäure-bis-(2,4-di-tert-butyl-phenyl)-ester-chlorid wurden 147 g farbloser Feststoff mit einem Gehalt von 93% an obiger Verbindung erhalten. Kristallisieren aus Aceton lieferte farblose Kristalle vom Schmp. 146-148 °C;

$$[^{31}P\text{-NMR: } \delta_{CDCl_3}=155{,}9 \text{ ppm}].$$

| | | | | |
|---|---|---|---|---|
| $C_{39}H_{51}O_3P$ (598,80) | Ber.:<br>Gef.: | 78,22 % C,<br>78,6 % C, | 8,58 % H,<br>8,3 % H, | 5,17 % P<br>4,8 % P. |

11) **(4-Methoxy-phenyl)-phosphonigsäure-bis-(2',4'-di-tert.-butyl-phenyl)-ester:** Ausgehend von 46,75 g 4-Bromanisol und 119,3 g Phosphorigsäure-bis-(2,4-di-tert.-butyl-phenyl)-ester-chlorid wurden ca. 137 g farbloses Material vom Erweichungspunkt 50 °C und einem Gehalt von 93 % an obiger Verbindung erhalten;

$$[^{31}P\text{-NMR: } \delta_{CDCl_3} = 155{,}8 \text{ ppm}].$$

| | | | | |
|---|---|---|---|---|
| $C_{35}H_{49}O_3P$ (548,74 ) | Ber.:<br>Gef.: | 76,60 % C,<br>76,9 % C, | 9,00 % H,<br>9,2 % H, | 5,64 % P<br>5,2 % P. |

12) **4-Biphenyl-phosphonigsäure-bis-(2',4'-di-tert-butyl-phenyl)-ester:** Ausgehend von 58,3 g 4-Brom-biphenyl und 119,3 g Phosphorigsäure-bis-(2,4-di-tert-butyl-phenyl)-ester-chloridwurden ca 148 g farbloses Pulver vom Erweichungspunkt ca. 90 °C mit einem Gehalt von 90 % an obiger Verbindung erhalten

$$[^{31}P\text{-NMR: } \delta_{CDCl_3} = 154{,}8 \text{ ppm}].$$

Kristallisieren aus Acetonitril/Aceton (10:1) lieferte farblose Kristalle vom Schmp. 103-105 °C.

| | | | | |
|---|---|---|---|---|
| $C_{40}H_{51}O_2P$ (594,81) | Ber.:<br>Gef.: | 80,77 % C,<br>81,2 % C, | 8,64 % H,<br>8,8 % H, | 5,20 % P<br>4,9 % P |

13) **4-Brom-phenyl-phosphonigsäure-bis-(2',4'-di-tert.-butyl-phenyl)-ester:** Ausgehend von 59 g 1,4-Dibrombenzol und 119,3 g Phosphorigsäure-bis-(2,4-di-tert.-butyl-phenyl)-ester-chlorid wurden ca. 145 g amorpher Feststoff vom Erweichungspunkt 80 °C mit einem Gehalt von ca. 85% an obiger Verbindung

$$[^{31}P\text{-NMR: } \delta_{CDCl_3} = 152{,}4 \text{ ppm}]$$

erhalten. $C_{34}H_{46}BrO_2P$ (597,61).

14) **Phenylen-1,4-diphosphonigsäure-tetra-(2',4'-di-tert.-butyl-phenyl)-ester:** Abweichend von der obengenannten Vorschrift wurden auf 250 mmol (= 59 g) 1,4-Dibrom-benzol statt 250 mmol nun 500 mmol (= 12,2 g) Magnesium und 500 mmol (= 238 g) Phosphorigsäure-bis-(2,4-di-tert.-butyl-phenyl)-ester-chlorid verwendet und ca. 200 g an obiger Verbindung vom Schmp. 178-180 °C aus Aceton

$$[^{31}P\text{-NMR:} \delta_{CDCl_3} = 153{,}1 \text{ ppm}]$$

erhalten.

| | | | | |
|---|---|---|---|---|
| $C_{62}H_{88}O_4P_2$ (959,32) | Ber.:<br>Gef.: | 77,62 %C,<br>78,0 %C, | 9,24 %H,<br>9,0 %H, | 6,45 %P<br>6,2 %P. |

15) **Phenylen-1,3-diphosphonigsäure-tetra(2',4'-di-tert.-butyl-phenyl)-ester:** Es wurde analog Beispiel 14 gearbeitet, mit dem Unterschied, daß 1,3-Dibrom-benzol verwendet wurde. Man erhielt ca. 240 g eines beigen Feststoffes mit einem Gehalt von ca. 70 % an obiger Verbindung

$$[^{31}P\text{-NMR: } \delta_{CDCl_3} = 154{,}25 \text{ ppm}]$$

und einem Erweichungspunkt von 70-75 ° C.

Allgemeine Vorschrift für Verbindungen der Formel V, in denen die beiden Phenylreste durch A verbunden sind.

Es wurde zunächst wie bei der Herstellung der Verbindungen II gearbeitet, jedoch wurden bei einer Innentemperatur von -10 bis 0 ° C 250 mmol des betreffenden cyclischen Phosphorigsäure-diesterchlorids der Formel VI in 200 ml Tetrahydrofuran/n-Hexan (2:1) zudosiert. Anschließend rührte man 1 Stunde bei 0 ° C sowie 2,5 Stunden bei Raumtemperatur nach. Nach Filtration vom ausgefallenen Magnesiumhalogenid, das mit 250 ml Tetrahydrofuran/n-Hexan (4:1) nachgewaschen wurde, wurde das Lösungsmittel zunächst im Vakuum der Wasserstrahlpumpe und dann im Hochvakuum abdestilliert. Die Reinigung der Rohprodukte erfolgte durch Kristallisation.

**16. 4,8-Di-tert.-butyl-2,10-dimethyl-6-(1'-naphthyl)-12H-dibenzo[d,g][1,3,2]dioxaphosphocin:** Ausgehend von 51,8 g 1-Bromnaphthalin und 101,2 g 4,8-Di-tert.-butyl-6-chlor-2,10-dimethyl-12H-dibenzo[d,g]-[1,3,2]dioxaphosphocin wurden aus Aceton 94,3 g (= 76 %) obiger Verbindung in Form farbloser Kristalle vom Schmp. 251-253 ° C erhalten.

| | | | | |
|---|---|---|---|---|
| $C_{33}H_{37}O_2P$ (496,62) | Ber.:<br>Gef.: | 79,81 % C;<br>79,4 % C; | 7,50 % H;<br>7,8 % H; | 6,23 % P<br>6,0 % P |

**17. 4,8-Di-tert.-butyl-2,10-diäthyl-6-(1'-naphthyl)-12H-dibenzo[d,g][1,3,2]dioxaphosphocin:** Ausgehend von 51,8 g 1-Bromnaphthalin und 108,2 g 4,8-Di-tert.-butyl-6-chlor-2,10-diäthyl-12H-dibenzo[d,g]-[1,3,2]dioxaphosphocin wurden aus Acetonitril 106,2 g (= 81 %) obiger Verbindung in Form farbloser Kristalle vom Schmp. 206-208 ° C erhalten.

| | | | | |
|---|---|---|---|---|
| $C_{35}H_{41}O_2P$ (524,68) | Ber.:<br>Gef.: | 80,12 % C;<br>79,5 % C; | 7,87 % H;<br>7,8 % H; | 5,90 % P<br>5,7 % P |

**18. 4,8-Di-tert.-butyl-2,10-diäthyl-6-(2'-naphthyl)-12H-dibenzo[d,g][1,3,2]dioxaphosphocin:** Ausgehend von 51,8 g 2-Bromnaphthalin und 108,2 g 4,8-Di-tert.-butyl-6-chlor-2,10-diäthyl-12H-dibenzo[d,g]-[1,3,2]dioxaphosphocin wurden aus Acetonitril 109 g (= 83 %) obiger Verbindung in Form farbloser Kristalle vom Schmp. 222-224 ° C erhalten.

| | | | | |
|---|---|---|---|---|
| $C_{35}H_{41}O_2P$ (524,68) | Ber.:<br>Gef.: | 80,12 % C;<br>79,9 % C; | 7,87 % H;<br>8,1 % H; | 5,90 % P<br>5,7 % P |

**19. 4,8-Di-tert.-butyl-2,10-dimethyl-6-(4'-methyl-1'-naphthyl)-12H-dibenzo[d,g][1,3,2]dioxaphosphocin:** Ausgehend von 55,27 g 1-Brom-4-methylnaphthalin und 101,2 g 4,8-Di-tert.-butyl-6-chlor-2,10-dimethyl-12H-dibenzo-[d,g][1,3,2]dioxaphosphocin wurden aus Aceton/Dichlormethan (5:1) 95,7 g (= 75 %) obiger Verbindung in Form farbloser Kristalle vom Schmp. 273-276 ° C erhalten.

| | | | | |
|---|---|---|---|---|
| $C_{34}H_{39}O_2P$ (510,66) | Ber.:<br>Gef.: | 79,97 % C;<br>79,3 % C; | 7,70 % H;<br>7,8 % H; | 6,06 % P<br>6,1 % P |

**20. 4,8-Di-tert.-butyl-2,10-diäthy-6-(4'-methyl-1'-naphthyl)-12H-dibenzo[d,g][1,3,2]dioxaphosphocin:** Ausgehend von 55,27 g 1-Brom-4-methylnaphthalin und 108,2 g 4,8-Di-tert.-butyl-6-chlor-2,10-diäthyl-12H-dibenzo[d,g][1,3,2]-dioxaphosphocin wurden aus Aceton 100 g (= 74 %) obiger Verbindung in Form farbloser Kristalle vom Schmp. 258-260 ° C erhalten.

| | | | | |
|---|---|---|---|---|
| $C_{36}H_{43}O_2P$ (538,71) | Ber.:<br>Gef.: | 80,26 % C;<br>79,9 % C; | 8,04 % H,<br>8,3 % H; | 5,74 % P<br>5,4 % P |

**21. 4,8-Di-tert.-butyl-2,10-diäthyl-6-(4'-biphenyl)-12H-dibenzo[d,g][1,3,2]dioxaphosphocin:** Ausgehend von 58,3 g 4-Brom-biphenyl und 108,2 g 4,8-Di-tert.-butyl-6-chlor-2,10-diäthyl-12H-dibenzo[d,g]-[1,3,2]dioxaphosphocin wurden aus Acetonitril 103,3 g (= 75 %) obiger Verbindung in Form farbloser Kristalle vom Schmp. 170-172 °C erhalten.

| | | | | |
|---|---|---|---|---|
| $C_{37}H_{43}O_2P$ (550,72) | Ber.:<br>Gef.: | 80,70 % C;<br>80,2 % C; | 7,87 % H;<br>7,9 % H; | 5,62 % P<br>5,4 % P |

**22. 4,8-Di-tert.-butyl-2,10-diäthyl-6-(2',4',5'-trimethyl-1'-phenyl)-12H-dibenzo[d,g][1,3,2]dioxaphosphocin:** Ausgehend von 49,7 g 5-Brom-1,2,4-trimethylbenzol und 108,2 g 4,8-Di-tert.-butyl-6-chlor-2,10-diäthyl-12H-dibenzo[d,g][1,3,2]dioxaphosphocin wurden aus Acetonitril/Aceton (1:1) 113,7 g (= 88 %) obiger Verbindung in Form farbloser Kristalle vom Schmp. 198-200 °C erhalten.

| | | | | |
|---|---|---|---|---|
| $C_{34}H_{45}O_2P$ (516,70) | Ber.:<br>Gef.: | 79,03 % C;<br>79,3 % C; | 8,77 % H;<br>8,7 % H; | 6,0 % P<br>5,8 % P |

**23. 4,4'-Biphenylen-bis-[4,8-di-tert.-butyl-2,10-diäthyl-6-yl-12H-dibenzo[d,g][1,3,2]dioxaphosphocin]:** Abweichend von der allgemeinen Vorschrift wurden 200 mmol (= 62,4 g) 4,4'-Dibrombiphenyl mit 600 mmol (= 14,6 g) Magnesiumspänen in 300 ml Tetrahydrofuran unter Einwirkung von Ultraschall (40 kHz) grignardiert, und anschließend mit 400 mmol (= 173,2 g) 4,8-Di-tert.-butyl-6-chlor-2,10-diäthyl-12H-dibenzo[d,g][1,3,2]dioxaphosphocin in 250 ml Tetrahydrofuran umgesetzt. Nach Abziehen des Lösungsmittels verblieben ca. 190 g eines Feststoffes mit einem Gehalt (gemäß $^{31}$P-NMR) von 73 % an vorstehender Verbindung

$$(^{31}P\text{-NMR: } \delta_{CDCl_3} = 163{,}7 \text{ ppm}).$$

Aus Aceton wurden farblose Kristalle vom Schmp. 320 °C (Zersetzung) erhalten.

| | | | | |
|---|---|---|---|---|
| $C_{62}H_{76}O_4P_2$ (947,23) | Ber.:<br>Gef.: | 78,61 % C;<br>78,3 % C; | 8,08 % H;<br>8,2 % H; | 6,54 % P<br>6,3 % P |

**24. 4,4'-Biphenylen-bis-[4,8-di-tert.-butyl-2,10-dimethyl-6-yl-12H-dibenzo[d,g][1,3,2]dioxaphosphocin]:** Es wurde analog dem vorstehenden Beispiel gearbeitet, jedoch mit dem Unterschied, daß das Grignardreagenz mit 400 mmol (= 162 g) 4,8-Di-tert.-butyl-6-chlor-2,10-dimethyl-12H-dibenzo[d,g][1,3,2]-dioxaphosphocin umgesetzt wurde. Es verblieben ca. 180 g eines Feststoffes mit einem Gehalt (gemäß $^{31}$P-NMR) von 72 % an vorstehender Verbindung

$$(^{31}P\text{-NMR: } \delta_{CDCl_3} = 163{,}9 \text{ ppm}).$$

Aus Aceton wurden farblose Kristalle vom Schmp. 306-310 °C (Zersetzung) erhalten.

| | | | | |
|---|---|---|---|---|
| $C_{58}H_{68}O_4P_2$ (891,12) | Ber.:<br>Gef.: | 78,17 % C;<br>77,8 % C; | 7,69 % H;<br>7,8 % H; | 6,97 % P<br>6,7 % P |

## II. Beispiele für die Verwendung

Für die Versuche wurden die nachstehend aufgelisteten erfindungsgemäßen Phosphonite eingesetzt.

**25 und 31:** 4-Biphenyl-phosphonigsäure-bis-(2',4'-di-tert.-butyl-phenyl)-ester gemäß Beispiel 12, Gehalt laut $^{31}P$-NMR ca. 98 %

**26 und 32:** $\beta$-Naphthyl-phosphonigsäure-bis-(2',4'-di-tert.-butyl-phenyl)-ester gemäß Beispiel 9, Gehalt laut $^{31}P$-NMR ca. 98 %

**27 und 33:** Phenylen-1,4-diphosphonigsäure-tetra-(2',4'-di-tert.-butyl-phenyl)-ester gemäß Beispiel 14, Gehalt laut $^{31}P$-NMR ca. 95 %

**28 und 34:** (4-Methyl-1-naphthyl)-phosphonigsäure-bis-(2',4'-di-tert.-butyl-phenyl)ester gemäß Beispiel 6

**29 und 35:** Bis-(2,4-di-tert.-butyl-phenyl)-(2-Methylnaphthyl)-phosphonat gemäß Beispiel 8

**30 und 36:** Bis-(2,4-di-tert.-butyl-phenyl)-(2-methoxy-6-naphthyl)-phosphonat gemäß Beispiel 10

### 25 bis 30 und Vergleichsbeispiele A bis C

100,0 g unstabilisiertes Polypropylenpulver (Dichte: 0,903 g/cm$^3$; Schmelzindex MFI 230/5: 4 g/10 min) wurden mit 0,1 g Ca-Stearat als Säureakzeptor sowie den in den Tabellen angegebenen Mengen Phosphorverbindung vermischt und mittels eines Laborextruders (Kurzkompressionsschnecke, Schneckendurchmesser 20 mm; Länge 400 mm, Düse 30 mm lang, mm Durchmesser; Drehzahl: 125 Upm; Temperaturprogramm: 200/230/230 °C) mehrfach extrudiert. Nach dem 1., 5. und 10. Durchgang wurden Proben aus dem Granulat entnommen und an diesen Proben der Schmelzindex nach DIN 53 735 sowie die Vergilbung als Yellowness Index nach ASTM D 1925-70 gemessen. Außerdem wurden vom Granulat des 1. Durchgangs Spritzplatten mit den Maßen 60 x 60 x 1 mm hergestellt und die Vergilbung sofort und nach Warmlagerung (7 Tage bei 100 °C) gemessen.

Die Ergebnisse sind in den Tabellen 1, 2 und 5 aufgelistet.

### 31 bis 36 und Vergleichsbeispiele D bis F

100,0 g unstabilisiertes Polypropylenpulver (Dichte: 0,903 g/cm$^3$; Schmelzindex MFI 230/5: 4 g/10 min) wurden mit 0,1 g Ca-Stearat als Säureakzeptor und 0,05 g Äthylenglykol-bis-(3,3-bis-(3'-t-butyl-4'-hydroxyphenyl)-butyrat sowie den in den Tabellen angegebenen Mengen der Phosphorverbindung vermischt und mittels eines Laborextruders (Kurzkompressionsschnecke, Schneckendurchmesser 20 mm; Länge 400 mm; Düse 30 mm lang; 2 mm Durchmesser; Drehzahl: 125 Upm; Temperaturprogramm: 200/230/230 °C) mehrfach extrudiert. Nach dem 1., 5. und 10. Durchgang wurden Proben aus dem Granulat entnommen und an diesen Proben der Schmelzindex nach DIN 53 735 sowie die Vergilbung als Yellowness Index nach ASTM D 1925-70 gemessen. Außerdem wurden vom Granulat des 1. Durchgangs Spritzplatten mit den Maßen 60 x 60 x 1 mm hergestellt und die Vergilbung sofort und nach Warmlagerung (7 Tage bei 100 °C) gemessen.

Die Ergebnisse sind in den Tabellen 3, 4 und 5 aufgelistet.

Tabelle 1: Wirkung von Phosphorverbindungen auf die Verarbeitungsstabilität von Polypropylen. Schmelzindex MFI 230/5 nach mehrfacher Granulierung. (MFI in g/10 min)

| Beispiel | Phosphorverbindung | MFI nach | | |
|---|---|---|---|---|
| | | 1. | 5. | 10. Granulierung |
| Vgl. A | keine | 10 | 15,3 | 22,2 |
| Vgl. B | 0,1 g Tris-(2,4-di-t-butyl-phenyl)-phosphit | 6,4 | 7,0 | 10,5 |
| Vgl. C | 0,1 g käufliches Phosphonit*) | 5,5 | 5,7 | 7,8 |
| 25 | 0,1 g (erfindungsgemäßes Phosphonit) | 6,15 | 7,8 | 11,0 |
| 26 | " | 6,4 | 6,7 | 7,16 |
| 27 | " | 6,2 | 7,3 | 8,6 |
| 28 | " | 6,1 | 6,3 | 11,3 |
| 29 | " | 6,6 | 8,0 | 9,4 |
| 30 | " | 5,4 | 6,0 | 5,9 |

*) Tetrakis-(2,4-di-t-butylphenyl)-4,4'-biphenylendiphosphonit

Tabelle 2: Farbverlauf (Yellowness Index nach ASTM D 1925-70) bei mehrfacher Granulierung von Polypropylen.

| Beispiel | Phosphorverbindung | MFI nach 1. | 5. | 10. Granulierung |
|---|---|---|---|---|
| Vgl. A | keine | 18,7 | 25,7 | 27,7 |
| Vgl. B | 0,1 g Tris-(2,4-di-t-butyl-phenyl)-phosphit | 13,3 | 23,0 | 30,4 |
| Vgl. C | 0,1 g käufliches Phosphonit*) | 12,8 | 21,0 | 26,1 |
| 25 | 0,1 g (erfindungsgemäßes Phosphonit) | 21,5 | 34,4 | 39,5 |
| 26 | " | 8,0 | 16,4 | 27,0 |
| 27 | " | 15,8 | 27,7 | 36,7 |
| 28 | " | 9,8 | 18,3 | 27,3 |
| 29 | " | 20,6 | 24,0 | 32,0 |
| 30 | " | 7,4 | 11,7 | 16,3 |

*) Tetrakis-(2,4-di-t-butylphenyl)-4,4'-biphenylendiphosphonit

**Tabelle 3:** Wirkung von Phosphorverbindungen auf die Verarbeitungsstabilität von Polypropylen. Schmelzindex MFI 230/5 nach mehrfacher Granulierung. (MFI in g/10 min)

| Beispiel | Phosphorverbindung | MFI nach der | | |
|---|---|---|---|---|
| | | 1. | 5. | 10. Granulierung |
| Vgl. D | keine | 6,3 | 8,8 | 14,9 |
| Vgl. E | 0,05 g Tris-(2,4-di-t-butyl-phenyl)-phosphit | 5,2 | 6,4 | 6,4 |
| Vgl. F | 0,05 g käufliches Phosphonit*) | 4,9 | 5,5 | 6,4 |
| 31 | 0,05 g (erfindungsgemäßes Phosphonit) | 4,1 | 5,7 | 6,7 |
| 32 | " | 4,3 | 4,3 | 4,4 |
| 33 | " | 4,3 | 4,8 | 5,2 |
| 34 | " | 4,4 | 4,4 | 5,4 |
| 35 | " | 4,4 | 5,8 | 7,1 |
| 36 | " | 4,6 | 4,9 | 5,6 |

*) Tetrakis-(2,4-di-t-butylphenyl)-4,4'-biphenylendiphosphonit

**Tabelle 4:** Farbverlauf (Yellowness Index nach ASTM D 1925-70) bei mehrfacher Granulierung von Polypropylen.

| Beispiel | Phosphorverbindung | YI nach der 1. | 5. | 10. Granulierung |
|---|---|---|---|---|
| Vgl. D | keine | 13,7 | 32,7 | 35,5 |
| Vgl. E | 0,05 g Tris-(2,4-di-t-butyl-phenyl)-phosphit | 15,5 | 27,8 | 36,1 |
| Vgl. F | 0,05 g käufliches Phosphonit*) | 8,7 | 19,4 | 26,0 |
| 31 | 0,05 g (erfindungsgemäßes Phosphonit) | 8,7 | 23,2 | 33,4 |
| 32 | " | 9,2 | 14,9 | 19,3 |
| 33 | " | 10,0 | 15,1 | 21,0 |
| 34 | " | 10,3 | 16,8 | 22,4 |
| 35 | " | 14,7 | 30,2 | 38,5 |
| 36 | " | 12,5 | 23,0 | 30,0 |

*) Tetrakis-(2,4-di-t-butylphenyl)-4,4'-biphenylendiphosphonit

Tabelle 5

| Farbverlauf an 1 mm-Spritzplatten sofort nach Herstellung und nach Temperung (7 Tage bei 100 °C) | | |
|---|---|---|
| | YI sofort | YI nach 7 Tagen |
| Vgl. A | 4,2 | 10,1 |
| Vgl. B | 3,4 | 13,0 |
| Vgl. C | 4,5 | 12,5 |
| 25 | 6,2 | 14,9 |
| 26 | 2,7 | 9,9 |
| 27 | 3,8 | 13,1 |
| 28 | 2,7 | 10,8 |
| 29 | 3,3 | 13,3 |
| 30 | 2,2 | 10,6 |
| Vgl. D | 3,5 | 5,6 |
| Vgl. E | 4,7 | 6,6 |
| Vgl. F | 2,9 | 3,8 |
| 31 | 2,2 | 3,2 |
| 32 | 2,4 | 3,4 |
| 33 | 2,5 | 3,5 |
| 34 | 2,6 | 4,0 |
| 35 | 4,1 | 6,0 |
| 36 | 3,5 | 4,6 |

**Patentansprüche**

**1.** Verfahren zur Herstellung von Phosphonigsäurearylestern der Formel V

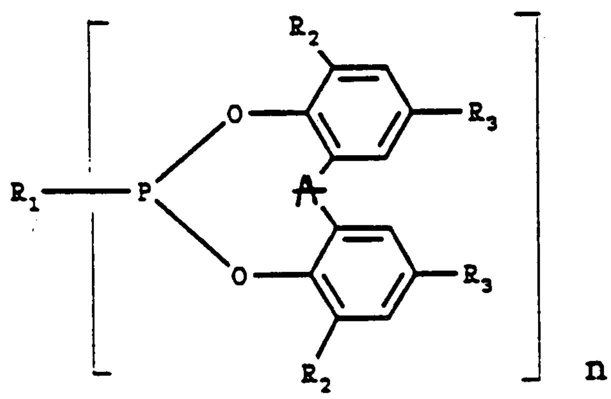

(V),

worin A nicht existent ist oder eine direkte Bindung oder eine zweiwertige Kohlenwasserstoffbrücke mit 1 bis 6 Kohlenstoffatomen, die durch weiter unten unter $R^1$ genannte Gruppen substituiert sein kann, oder ein Heteroatom, Cycloalkyliden mit 4 bis 8 Kohlenstoffatomen oder Phenylalkyliden mit 7 bis 12 Kohlenstoffatomen darstellt, n 1 oder 2, $R^1$ als einwertiger Rest einen nicht-aromatischen Kohlenwasserstoffrest mit 1 - 18 Kohlenstoffatomen, einen Phenyl- oder Benzylrest, die 1 bis 3 Substituenten tragen können, $\alpha$-Methylbenzyl, $\alpha,\alpha$-Dimethylbenzyl, Naphthyl oder einen 1 bis 5 Substituenten tragenden Naphthylrest darstellt, wobei die Substituenten gleich oder verschieden sind und einen nicht-aromatischen Kohlenwasserstoffrest, einen Alkoxyrest, einen Alkylthiorest oder einen Dialkylaminorest, worin die Alkylreste jeweils 1 bis 8 Kohlenstoffatome haben, Aryl oder Aryloxy mit jeweils 6 bis 10 Kohlenstoffatomen oder Halogen mit einer Ordnungszahl von 9 bis 35 darstellen, und als zweiwertiger Rest einen Phenylenrest, der unsubstituiert ist oder mit bis zu 2 nicht-aromatischen Kohlenwasserstoffresten mit jeweils 1 bis 8 Kohlenstoffatomen substituiert ist oder einen Naphthylenrest, der unsubstituiert ist oder 1 bis 4 nicht-aromatische Kohlenwasserstoffreste mit jeweils 1 bis 8 Kohlenstoffatomen als Substituenten trägt, oder wenn die beiden Phenylreste durch A verbunden sind, auch Biphenylen sein

kann,
$R^2$ ein nicht-aromatischer Kohlenwasserstoffrest mit 1 bis 18 C-Atomen, Aryl, Arylmethyl, Aryläthyl oder Arylisopropyl ist, wobei das Aryl jeweils 6 bis 10 C-Atome enthält, und
$R^3$ Wasserstoff oder eine unter $R^2$ genannte Gruppe darstellt,
dadurch gekennzeichnet, daß man in einer ersten Stufe ein Kohlenwasserstoffhalogenid $R^1(\text{-Hal})_n$, worin $R^1$ die obengenannte Bedeutung hat, n = 1 oder 2 ist und das Halogen ein Atomgewicht von mindestens 35 hat, unter Grignard-Bedingungen mit mindestens molaren Mengen an Magnesium zu den entsprechenden Grignard-Verbindungen $R^1(MgHal)_n$ umsetzt und diese in einer zweiten Stufe mit Phosphorigsäure-bis-arylester-halogeniden der Formel VI

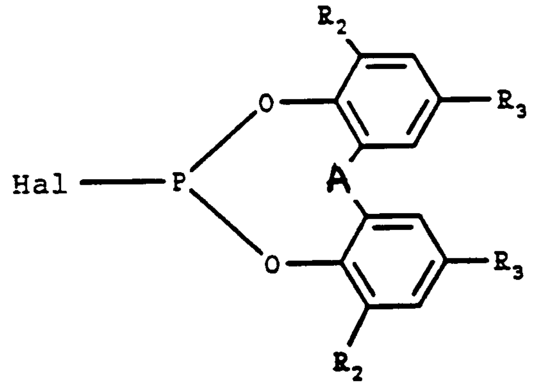

(VI),

worin A, $R^2$, $R^3$ und Hal die obengenannte Bedeutung haben, unter Bildung der Phosphonigsäure-arylester V umsetzt.

**2.** Verfahren nach Anspruch 1, dadurch gekennzeichnet, daß in den Substituenten von $R^1$ Chlor oder Brom ist.

**3.** Verfahren nach Anspruch 1 oder 2, dadurch gekennzeichnet, daß $R^1$ Naphthyl oder ein Derivat davon mit einem Alkylrest von 1 bis 4 C-Atomen ist.

**4.** Verfahren nach einem oder mehreren der Ansprüche 1 bis 3, dadurch gekennzeichnet, daß $R^2$ einen nichtaromatischen Kohlenwasserstoffrest mit bis zu 12, insbesondere von 4 bis 10 C-Atomen darstellt.

**5.** Phosphonigsäurearylester der Formel V

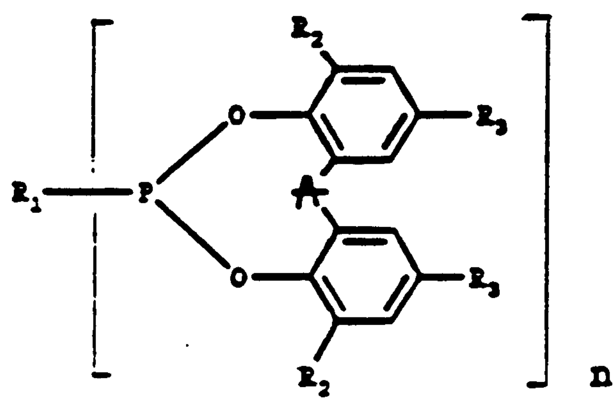

(V),

worin A nicht existent ist oder eine zweiwertige Kohlenwasserstoffbrücke mit 1 bis 6 Kohlenstoffatomen, die durch weiter unten unter $R^1$ genannte Gruppen substituiert sein kann, oder ein Heteroatom, Cycloalkyliden mit 4 bis 8 Kohlenstoffatomen oder Phenylalkyliden mit 7 bis 12 Kohlenstoffatomen darstellt, n 1 oder 2, $R^1$ als einwertiger Rest einen Phenyl- oder Benzylrest, die 1 bis 3 Substituenten tragen, $\alpha$-Methylbenzyl, $\alpha,\alpha$-Dimethylbenzyl,

oder einen 1 bis 5 Substituenten tragenden Naphthylrest darstellt, wobei die Substituenten gleich

oder verschieden sein können und einen nicht-aromatischen Kohlenwasserstoffrest, einen Alkoxyrest oder einen Alkylthiorest, worin die Alkylreste jeweils 1 bis 8 Kohlenstoffatome haben, Aryl oder Aryloxy mit jeweils 6 bis 10 Kohlenstoffatomen oder Halogen mit einer Ordnungszahl von 9 bis 35 darstellen und als zweiwertiger Rest einen Naphthylenrest, der unsubstituiert ist oder 1 bis 4 nichtaromatische Kohlenwasserstoffreste mit jeweils 1 bis 8 Kohlenstoffatomen als Substituenten trägt, oder, wenn A nicht existent ist, einen Phenylenrest, der unsubstituiert ist oder mit bis zu 2 nicht-aromatischen Kohlenwasserstoffresten mit jeweils 1 bis 8 Kohlenstoffatomen substituiert ist, oder einen unsubstituierten Naphthylrest,
$R^2$ ein nicht-aromatischer Kohlenwasserstoffrest mit 1 bis 18 C-Atomen, Aryl, Arylmethyl, Aryläthyl oder Arylisopropyl ist, wobei das Aryl jeweils 6 bis 10 C-Atome enthält, und
$R^3$ Wasserstoff oder eine unter $R^2$ genannte Gruppe darstellt,
wobei von den Verbindungen mit n = 1, in denen $R^1$ Phenyl bedeutet, diejenigen ausgenommen sind, in denen zugleich
$R^2$ und $R^3$ jeweils tert.-Butyl,
$R^2$ tert.-Butyl und $R^3$ Wasserstoff,
$R^2$ tert.-Octyl und $R^3$ Methyl,
$R^2$ und $R^3$ jeweils tert.-Octyl und
$R^2$ und $R^3$ jeweils $\alpha,\alpha$-Dimethylbenzyl sind.

6. Verbindungen nach Anspruch 5, dadurch gekennzeichnet, daß $R^1$ ein unsubstituierter oder substituierter Naphthylrest ist.

7. Verwendung von Verbindungen der Formel V, wie in Anspruch 5 oder 6 definiert, für sich oder in Kombination mit einem phenolischen Antioxidans zur Stabilisierung von Kunststoffen, insbesondere Polymerisationskunststoffen.

8. Kunststoff-Formmasse, enthaltend einen thermoplastischen oder duroplastischen Kunststoff und einen Phosphonigsäurearylester der Formel V

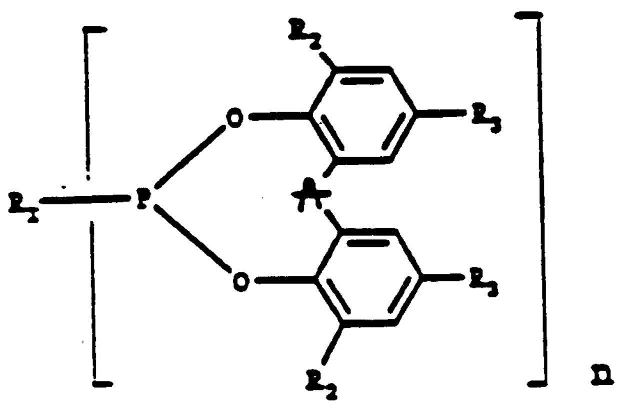

(V)

im Verhältnis von (90 bis 99,99) : (0,01 bis 10), wobei in Formel V A nicht existent ist oder eine zweiwertige Kohlenwasserstoffbrücke mit 1 bis 6 Kohlenstoffatomen, die durch weiter unten unter $R^1$ genannte Gruppen substituiert sein kann, oder ein Heteroatom, Cycloalkyliden mit 4 bis 8 Kohlenstoffatomen oder Phenylalkyliden mit 7 bis 12 Kohlenstoffatomen darstellt, n 1 oder 2, $R^1$ als einwertiger Rest einen Phenyl- oder Benzylrest, die 1 bis 3 Substituenten tragen, $\alpha$-Methylbenzyl, $\alpha,\alpha$-Dimethylbenzyl, oder einen 1 bis 5 Substituenten tragenden Naphthylrest darstellt, wobei die Substituenten gleich oder verschieden sein können und einen nicht-aromatischen Kohlenwasserstoffrest, einen Alkoxyrest oder einen Alkylthiorest, worin die Alkylreste jeweils 1 bis 8 Kohlenstoffatome haben, Aryl oder Aryloxy mit jeweils 6 bis 10 Kohlenstoffatomen oder Halogen mit einer Ordnungszahl von 9 bis 35 darstellen und als zweiwertiger Rest einen Naphthylenrest, der unsubstituiert ist oder 1 bis 4 nicht-aromatische Kohlenwasserstoffreste mit jeweils 1 bis 8 Kohlenstoffatomen als Substituenten trägt, oder, wenn A nicht existent ist, einen Phenylenrest, der unsubstituiert ist oder mit bis zu 2 nicht-aromatischen Kohlenwasserstoffresten mit jeweils 1 bis 8 Kohlenstoffatomen substituiert ist, oder einen unsubstituierten Naphthylrest,
$R^2$ ein nicht-aromatischer Kohlenwasserstoffrest mit 1 bis 18 C-Atomen, Aryl, Arylmethyl, Aryläthyl oder

Arylisopropyl ist, wobei das Aryl jeweils 6 bis 10 C-Atome enthält,
$R^3$ Wasserstoff oder eine unter $R^2$ genannte Gruppe darstellt,
wobei von den Verbindungen mit n = 1, in denen $R^1$ Phenyl bedeutet, diejenigen ausgenommen sind, in denen zugleich
$R^2$ und $R^3$ jeweils tert.-Butyl,
$R^2$ tert.-Butyl und $R^3$ Wasserstoff,
$R^2$ tert.-Octyl und $R^3$ Methyl,
$R^2$ und $R^3$ jeweils tert.-Octyl und
$R^2$ und $R^3$ jeweils $\alpha,\alpha$-Dimethylbenzyl sind.

**9.** Kunststoff-Formmasse nach Anspruch 8, dadurch gekennzeichnet, daß der Kunststoff ein Polyolefin, vorzugsweise Polypropylen ist.

**10.** Kunststoff-Formmasse nach Anspruch 8 oder 9, dadurch gekennzeichnet, daß sie
a) den thermoplastischen oder duroplastischen Kunststoff,
b) das genannte Phosphonit und
c) einen Ester von $c_1$) der 3,3-Bis-(3'-t-butyl-4'-hydroxyphenyl)-butansäure der Formel III

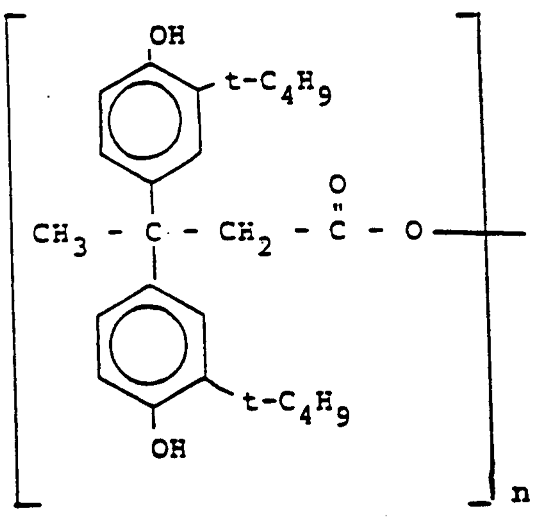

(III),

worin n 1 oder 2 ist und $R^4$ einen $C_1$ bis $C_{12}$-Alkylrest bedeutet, wenn n 1 ist, oder einen $C_1$ bis $C_{12}$-Alkylenrest bedeutet, wenn n 2 ist, oder $c_2$) der $\beta$-(3,5-di-t-butyl-4-hydroxy-phenyl)-propionsäure der Formel IV

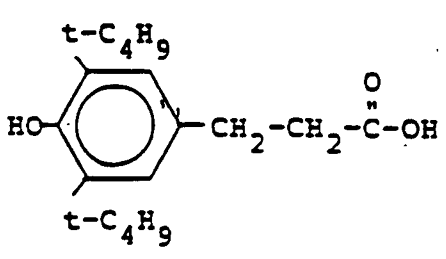

(IV)

mit einem ein- bis vierwertigen Alkohol im Verhältnis a:b:c von (90 bis 99,98) : (0,01 bis 5) : (0,01 bis 5) Gew.-%, vorzugsweise von (98 bis 99,95) : (0,025 bis 1) : (0,025 bis 1) enthält.

**11.** Kunststoff-Formmasse nach einem oder mehreren der Ansprüche 8 bis 10, dadurch gekennzeichnet, daß sie zusätzlich Antioxidantien, UV-Absorber, Lichtschutzmittel, Metalldesaktivatoren, Peroxidzerstörende Verbindungen, basische Costabilisatoren, Nukleierungsmittel, Füllstoffe, Verstärkungsmittel, Weichmacher, Gleitmittel, Emulgatoren, Pigmente, optische Aufheller, Flammschutzmittel, Antistatika oder Treibmittel enthält.

**12.** Ausführungsform nach einem oder mehreren der Ansprüche 1 bis 7, dadurch gekennzeichnet, daß als Verbindungen der Formel V solche in Betracht kommen, die keine Dialkyaminogruppe und kein Brückenglied A enthalten und demgemäß die Formel I

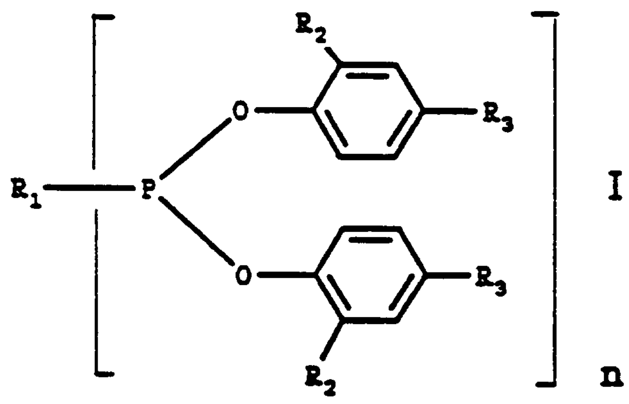

I

haben, in der $R^1$, $R^2$, $R^3$ und n im übrigen die genannte Bedeutung haben.

**13.** Ausführungsform nach einem oder mehreren der Ansprüche 8 bis 11, dadurch gekennzeichnet, daß als Verbindungen der Formel V solche gemäß Anspruch 12 in Betracht kommen.

## Claims

**1.** A process for preparing aryl phosphonites of the formula V

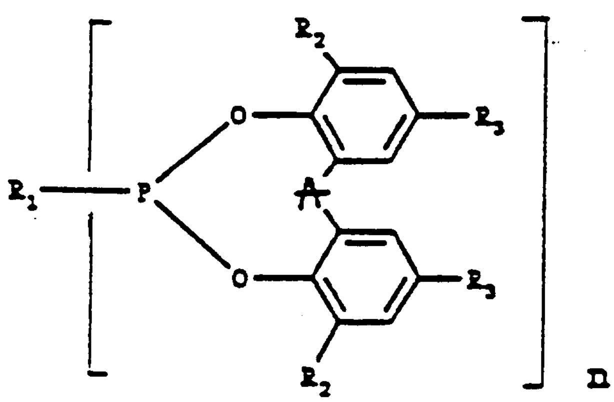

(V),

in which A is non-existent or a direct bond or a divalent hydrocarbon bridge having 1 to 6 carbon atoms which may be substituted by the groups mentioned below under $R^1$, or is a heteroatom, cycloalkylidene having 4 to 8 carbon atoms or phenylalkylidene having 7 to 12 carbon atoms, n is 1 or 2, $R^1$ as monovalent radical is a non-aromatic hydrocarbon radical having 1-18 carbon atoms, a phenyl or benzyl radical, each of which may carry 1 to 3 substituents, $\alpha$-methylbenzyl, $\alpha,\alpha$-dimethylbenzyl, naphthyl or a naphthyl radical carrying 1 to 5 substituents, where the substituents are identical or different and are a non-aromatic hydrocarbon radical, an alkoxy radical, an alkylthio radical or a dialkylamino radical, in which the alkyl radicals each have 1 to 8 carbon atoms, aryl or aryloxy each having 6 to 10 carbon atoms or halogen having an atomic number from 9 to 35, and $R^1$ as divalent radical is a phenylene radical which is unsubstituted or substituted by up to 2 non-aromatic hydrocarbon radicals each having 1 to 8 carbon atoms, or is a naphthylene radical which is unsubstituted or carries, as substituents, 1 to 4 non-aromatic hydrocarbon radicals each having 1 to 8 carbon atoms, or can also be biphenylene if the two phenyl radicals are linked by A,
$R^2$ is a non-aromatic hydrocarbon radical having 1 to 18 carbon atoms, aryl, arylmethyl, arylethyl or arylisopropyl, where the aryl in each case contains 6 to 10 carbon atoms, and
$R^3$ is hydrogen or a group mentioned under $R^2$,

which comprises reacting, in a first step, a hydrocarbon halide $R^1(-Hal)_n$, in which $R^1$ has the abovementioned meaning, n is 1 or 2, and the halogen has an atomic weight of at least 35, under Grignard conditions with at least molar amounts of magnesium to give the corresponding Grignard compounds $R^1(MgHal)_n$, and reacting these Grignard compounds, in a second step, with diaryl chlorophosphites of the formula VI

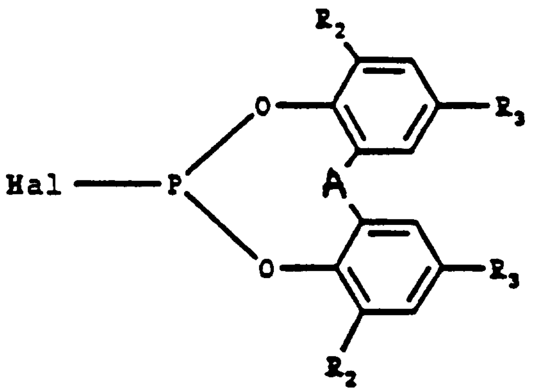

(VI),

in which A, $R^2$, $R^3$ and Hal have the abovementioned meaning, to give the aryl phosphonite V.

**2.** The process as claimed in claim 1, wherein in the substituents of $R^1$ chlorine or bromine is present.

**3.** The process as claimed in claim 1 or 2, wherein $R^1$ is naphthyl or a derivative thereof containing an alkyl radical of 1 to 4 carbon atoms.

**4.** The process as claimed in one or more of claims 1 to 3, wherein $R^2$ is a non-aromatic hydrocarbon radical having up to 12, in particular from 4 to 10, carbon atoms.

**5.** An aryl phosphonite of the formula V

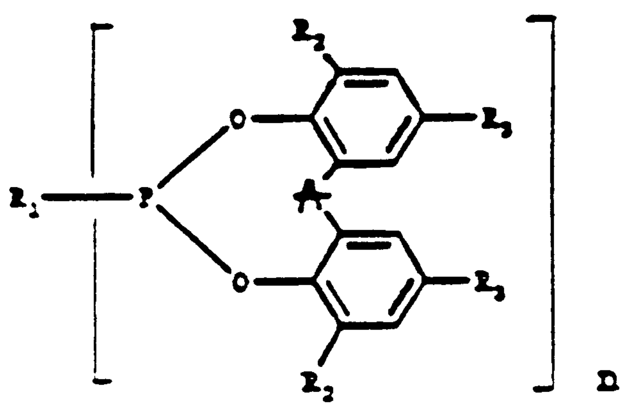

(V),

in which A is non-existent or a divalent hydrocarbon bridge having 1 to 6 carbon atoms which may be substituted by the groups mentioned below under $R^1$, or is a heteroatom, cycloalkylidene having 4 to 8 carbon atoms or phenylalkylidene having 7 to 12 carbon atoms, n is 1 or 2, $R^1$ as monovalent radical is a phenyl or benzyl radical, each of which carries 1 to 3 substituents, α-methylbenzyl, α,α-dimethylbenzyl, or a naphthyl radical carrying 1 to 5 substituents, where the substituents may be identical or different and are a non-aromatic hydrocarbon radical, an alkoxy radical or an alkylthio radical, in which the alkyl radicals each have 1 to 8 carbon atoms, aryl or aryloxy each having 6 to 10 carbon atoms or halogen having an atomic number from 9 to 35, and $R^1$ as divalent radical is a naphthylene radical which is unsubstituted or carries, as substituents, 1 to 4 non-aromatic hydrocarbon radicals each having 1 to 8 carbon atoms, or is a phenylene radical which is unsubstituted or substituted by up to 2 non-aromatic hydrocarbon radicals each having 1 to 8 carbon atoms if A is non-existent, or is an unsubstituted naphthyl radical,

$R^2$ is a non-aromatic hydrocarbon radical having 1 to 18 carbon atoms, aryl, arylmethyl, arylethyl or arylisopropyl, where the aryl in each case contains 6 to 10 carbon atoms, and
$R^3$ is hydrogen or a group mentioned under $R^2$,
where of the compounds in which n is 1 and $R^1$ is phenyl, those are excepted in which simultaneously
$R^2$ and $R^3$ are each tert.-butyl,
$R^2$ is tert.-butyl and $R^3$ is hydrogen,
$R^2$ is tert.-octyl and $R^3$ is methyl,
$R^2$ and $R^3$ are each tert.-octyl, and
$R^2$ and $R^3$ are each $\alpha,\alpha$-dimethylbenzyl.

**6.** A compound as claimed in claim 5, wherein $R^1$ is a substituted or unsubstituted naphthyl radical.

**7.** Use of a compound of the formula V as defined in claim 5 or 6 on its own or in combination with a phenolic antioxidant for stabilizing plastics, in particular polymerization plastics.

**8.** A plastic molding compound comprising a thermoplastic or thermoset material and an aryl phosphonite of the formula V

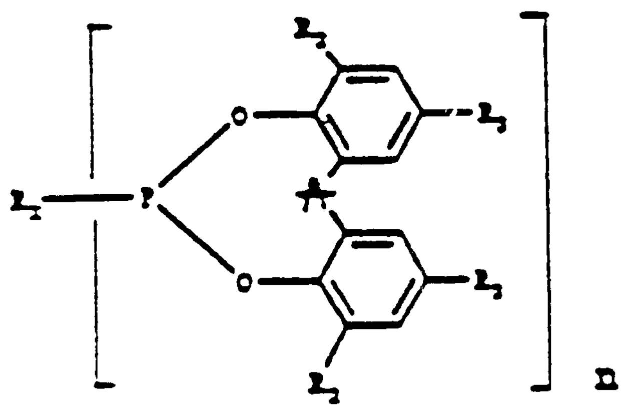

(V)

in the ratio of (90 to 99.99):(0.01 to 10), where in formula V A is non-existent or a divalent hydrocarbon bridge having 1 to 6 carbon atoms which may be substituted by the groups mentioned below under $R^1$ or is a heteroatom, cycloalkylidene having 4 to 8 carbon atoms or phenylalkylidene having 7 to 12 carbon atoms, n is 1 or 2, $R^1$ as monovalent radical is a phenyl or benzyl radical, each of which carries 1 to 3 substituents, $\alpha$-methylbenzyl, $\alpha,\alpha$-dimethylbenzyl, or a naphthyl radical carrying 1 to 5 substituents, where the substituents may be identical or different and are a non-aromatic hydrocarbon radical, an alkoxy radical or an alkylthio radical, in which the alkyl radicals each have 1 to 8 carbon atoms, aryl or aryloxy each having 6 to 10 carbon atoms or halogen having an atomic number from 9 to 35, and $R^1$ as divalent radical is a naphthylene radical which is unsubstituted or carries, as substituents, 1 to 4 non-aromatic hydrocarbon radicals each having 1 to 8 carbon atoms, or is a phenylene radical which is unsubstituted or substituted by up to 2 non-aromatic hydrocarbon radicals each having 1 to 8 carbon atoms if A is non-existent, or is an unsubstituted naphthyl radical,
$R^2$ is a non-aromatic hydrocarbon radical having 1 to 18 carbon atoms, aryl, arylmethyl, arylethyl or arylisopropyl, where the aryl in each case contains 6 to 10 carbon atoms,
$R^3$ is hydrogen or a group mentioned under $R^2$,
where of the compounds in which n is 1 and $R^1$ is phenyl, those are excepted in which simultaneously
$R^2$ and $R^3$ are each tert.-butyl,
$R^2$ is tert.-butyl and $R^3$ is hydrogen,
$R^2$ is tert.-octyl and $R^3$ is methyl,
$R^2$ and $R^3$ are each tert.-octyl, and
$R^2$ and $R^3$ are each $\alpha,\alpha$-dimethylbenzyl.

**9.** A plastic molding compound as claimed in claim 8, wherein the plastic is a polyolefin, preferably polypropylene.

**10.** A plastic molding compound as claimed in claim 8 or 9, comprising
a) the thermoplastic or thermoset material,
b) the phosphonite mentioned, and
c) an ester of $c_1$) of 3,3-bis(3'-t-butyl-4'-hydroxyphenyl)butanoic acid of the formula III

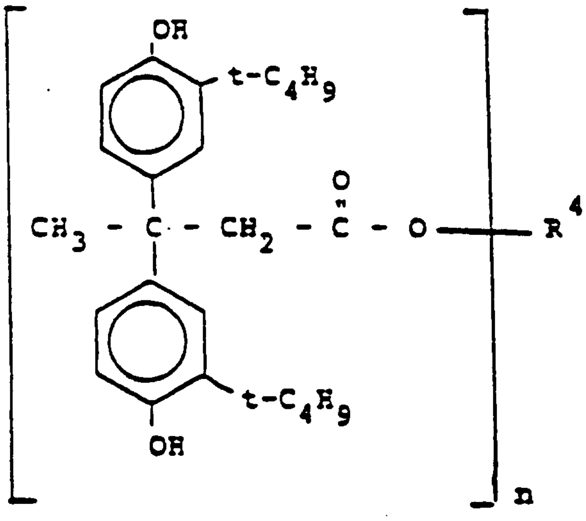

(III),

in which n is 1 or 2 and $R^4$ is a $C_1$ to $C_{12}$-alkyl radical if n is 1 or a $C_1$ to $C_{12}$-alkylene radical if n is 2, or $c_2$) of ß-(3,5-di-t-butyl-4-hydroxyphenyl)propionic acid of the formula IV

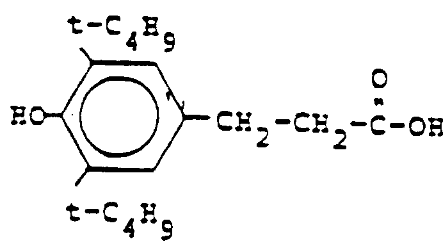

(IV)

with a mono- to tetrahydric alcohol in an a:b:c ratio of (90 to 99.98):(0.01 to 5):(0.01 to 5) % by weight, preferably of (98 to 99.95):(0.025 to 1):(0.025 to 1).

**11.** A plastic molding compound as claimed in one or more of claims 8 to 10, which additionally comprises antioxidants, UV absorbers, light stabilizers, metal deactivators, peroxide-destroying compounds, basic co-stabilisers, nucleating agents, fillers, reinforcing agents, plasticizers, lubricants, emulsifiers, pigments, optical brighteners, flameproofing agents, antistats or blowing agents.

**12.** An embodiment as claimed in one or more of claims 1 to 7, wherein suitable compounds of the formula V are those which do not contain a dialkylamino group and a bridging member A and accordingly have the formula I

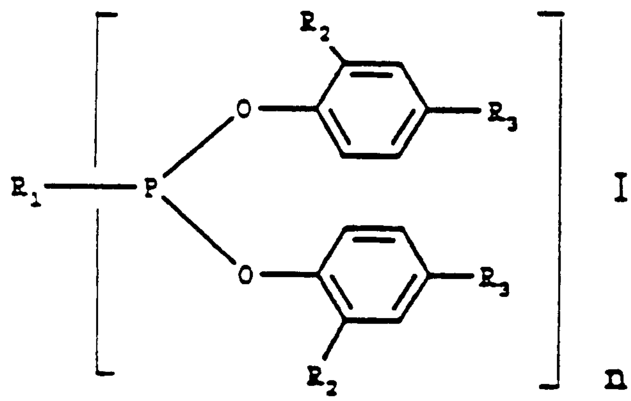

I ,

in which $R^1$, $R^2$, $R^3$ and n incidentally have the meaning given.

13. An embodiment as claimed in one or more of claims 8 to 11, wherein suitable compounds of the formula V are those claimed in claim 12.

## Revendications

1. Procédé de préparation d'esters aryliques d'acides phosphoneux de formule V

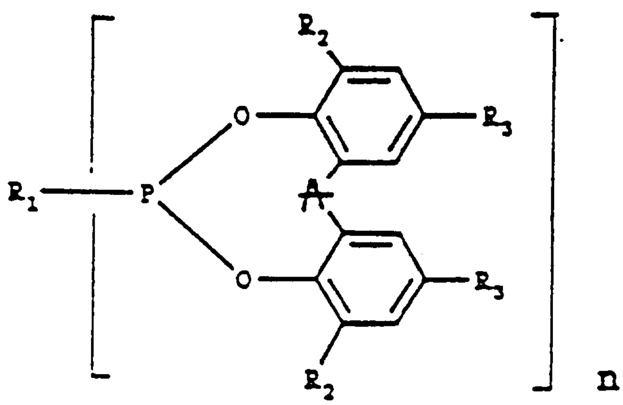

(V) ,

dans laquelle A n'existe pas ou est une liaison directe, ou représente un pont hydrocarboné divalent de 1 à 6 atomes de carbone qui peut être substitué par des groupes indiqués plus loin pour $R^1$, ou un hétéroatome, un cycloalkylidène de 4 à 8 atomes de carbone ou un phénylalkylidène de 7 à 12 atomes de carbone, n est 1 ou 2, $R^1$ représente, en tant que reste monovalent, un reste hydrocarboné non aromatique de 1 à 18 atomes de carbone, un reste phényle ou benzyle pouvant porter 1 à 3 substituants, $\alpha$-méthylbenzyle, $\alpha,\alpha$-diméthylbenzyle, naphtyle, ou un reste naphtyle portant 1 à 5 substituants, les substituants étant identiques ou différents et représentant un reste hydrocarboné non aromatique, un reste alcoxy, un reste alkylthio ou un reste dialkylamino, où les restes alkyle ont chacun 1 à 8 atomes de carbone, un reste aryle ou aryloxy ayant chacun 6 à 10 atomes de carbone ou un halogène de numéro atomique 9 à 35, et, en tant que reste divalent, un reste phénylène non substitué ou substitué par 1 ou 2 restes hydrocarbonés non aromatiques ayant chacun 1 à 8 atomes de carbone ou un reste naphtylène qui n'est pas substitué ou qui porte comme substituants 1 à 4 restes hydrocarbonés non aromatiques ayant chacun de 1 à 8 atomes de carbone, ou peut être aussi, lorsque les deux restes phényle sont reliés par A, un reste biphénylène,

$R^2$ est un reste hydrocarboné non aromatique de 1 à 18 atomes de carbone, aryle, arylméthyle, aryléthyle ou arylisopropyle, le reste aryle contenant toujours 6 à 10 atomes de carbone, et

$R^3$ représente l'hydrogène ou un groupe cité pour $R^2$,

caractérisé en ce que, dans une première étape, l'on fait réagir un halogénure d'hydrocarbure $R^1$-$(Hal)_n$, dans lequel $R^1$ a la signification précitée, n = 1 ou 2 et l'halogène a une masse atomique d'au

moins 35, dans des réactions de Grignard, avec des quantités au moins molaires de magnésium pour former le réactif de Grignard correspondant $R^1(MgHal)_n$ que l'on fait réagir dans une seconde étape avec un halogénure-ester diarylique d'acide phosphoreux de formule VI

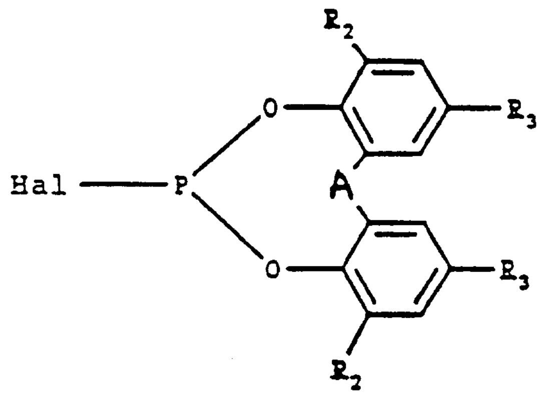

(VI),

dans laquelle $R^2$, $R^3$ et Hal ont la signification indiquée précédemment, pour former l'ester arylique d'acide phosphoneux de formule V.

**2.** Procédé selon la revendication 1, caractérisé en ce qu'il y a du chlore ou du brome dans les substituants de $R^1$.

**3.** Procédé selon la revendication 1 ou 2, caractérisé en ce que $R^1$ est un reste naphtyle ou un de ses dérivés avec un reste alkyle de 1 à 4 atomes de carbone.

**4.** Procédé selon l'une ou plusieurs des revendications 1 à 3, caractérisé en ce que $R^2$ représente un reste hydrocarboné non aromatique ayant jusqu'à 12, en particulier de 4 à 10 atomes de carbone.

**5.** Esters aryliques d'acides phosphoneux de formule V

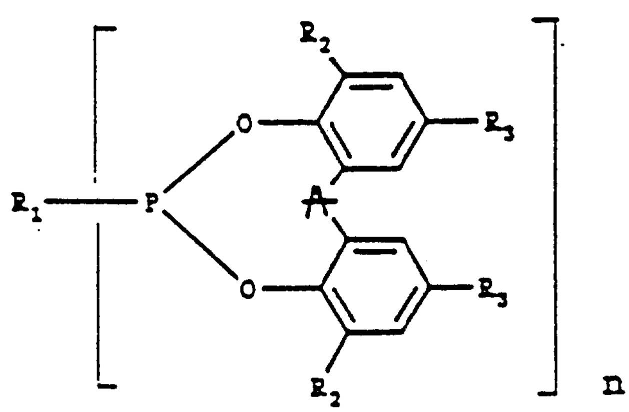

(V),

dans laquelle A n'existe pas ou représente un pont hydrocarboné divalent de 1 à 6 atomes de carbone qui peut être substitué par des groupes indiqués plus loin pour $R^1$, ou un hétéroatome, un cycloalkylidène de 4 à 8 atomes de carbone ou un phénylalkylidène de 7 à 12 atomes de carbone, n est 1 ou 2, $R^1$ représente, en tant que reste monovalent, un reste phényle ou benzyle portant 1 à 3 substituants, $\alpha$-méthylbenzyle, $\alpha,\alpha$-diméthylbenzyle, ou un reste naphtyle portant 1 à 5 substituants, les substituants étant identiques ou différents et représentant un reste hydrocarboné non aromatique, un reste alcoxy ou un reste alkylthio où les restes alkyle ont chacun 1 à 8 atomes de carbone, un reste aryle ou aryloxy ayant chacun 6 à 10 atomes de carbone ou un halogène de numéro atomique 9 à 35, et, en tant que reste divalent, un reste naphtylène qui n'est pas substitué ou qui porte comme substituants 1 à 4 restes hydrocarbonés ayant chacun de 1 à 8 atomes de carbone, ou, lorsque A n'existe pas, un reste phénylène non substitué ou substitué par 1 ou 2 restes hydrocarbonés non aromatiques ayant chacun de 1 à 8 atomes de carbone, ou un reste naphtyle non substitué,

$R^2$ est un reste hydrocarboné non aromatique de 1 à 18 atomes de carbone, aryle, arylméthyle, aryléthyle ou arylisopropyle, le reste aryle contenant toujours 6 à 10 atomes de carbone, et

$R^3$ représente l'hydrogène ou un groupe cité pour $R^2$,

à l'exception des composés dans lesquels n = 1, $R^1$ représente un phényle, et dans lesquels, en même temps,

$R^2$ et $R^3$ sont chacun un tert-butyle,

$R^2$ est un tert-butyle et $R^3$ l'hydrogène,

$R^2$ est un tert-octyle et $R^3$ un méthyle,

$R^2$ et $R^3$ sont chacun un tert-octyle et

$R^2$ et $R^3$ sont chacun un $\alpha,\alpha$-diméthylbenzyle.

6. Composés selon la revendication 5, caractérisés en ce que $R^1$ est un reste naphtyle non substitué ou substitué.

7. Utilisation de composés de formule V tels que définis dans la revendication 5 ou 6, seuls ou en combinaison avec un antioxydant phénolique, pour la stabilisation de matières plastiques, en particulier de matières plastiques de polymérisation.

8. Composition moulable de matière plastique, contenant une matière synthétique thermoplastique ou thermodurcissable et un ester arylique d'acide phosphoneux de formule V

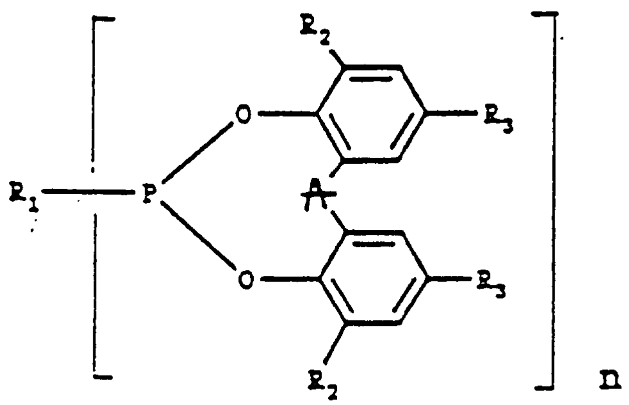

(V),

dans un rapport de (90 à 99,99):(0,01 à 10),

où A n'existe pas ou représente un pont hydrocarboné divalent de 1 à 6 atomes de carbone qui peut être substitué par des groupes indiqués plus loin pour $R^1$, ou un hétéroatome, un cycloalkylidène de 4 à 8 atomes de carbone ou un phénylalkylidène de 7 à 12 atomes de carbone, n est 1 ou 2, $R^1$ représente, en tant que reste monovalent, un reste phényle ou benzyle portant 1 à 3 substituants, $\alpha$-méthylbenzyle, $\alpha,\alpha$-diméthylbenzyle, ou un reste naphtyle portant 1 à 5 substituants, les substituants étant identiques ou différents et représentant un reste hydrocarboné non aromatique, un reste alcoxy ou un reste alkylthio où les restes alkyle ont chacun 1 à 8 atomes de carbone, un reste aryle ou aryloxy ayant chacun 6 à 10 atomes de carbone ou un halogène de numéro atomique 9 à 35, et, en tant que reste divalent, un reste naphtylène qui n'est pas substitué ou qui porte comme substituants 1 à 4 restes hydrocarbonés ayant chacun de 1 à 8 atomes de carbone, ou, lorsque A n'existe pas, un reste phénylène non substitué ou substitué par 1 ou 2 restes hydrocarbonés non aromatiques ayant chacun de 1 à 8 atomes de carbone, ou un reste naphtyle non substitué,

$R^2$ est un reste hydrocarboné non aromatique de 1 à 18 atomes de carbone, aryle, arylméthyle, aryléthyle ou arylisopropyle, le reste aryle contenant toujours 6 à 10 atomes de carbone, et

$R^3$ représente l'hydrogène ou un groupe cité pour $R^2$,

à l'exception des composés dans lesquels n = 1, $R^1$ représente un phényle, et dans lesquels, en même temps,

$R^2$ et $R^3$ sont chacun un tert-butyle,

$R^2$ est un tert-butyle et $R^3$ l'hydrogène,

$R^2$ est un tert-octyle et $R^3$ un méthyle,

$R^2$ et $R^3$ sont chacun un tert-octyle et

$R^2$ et $R^3$ sont chacun un $\alpha,\alpha$-diméthylbenzyle.

9. Compositions moulables de matière plastique selon la revendication 8, caractérisée en ce que la matière plastique est une polyoléfine, de préférence du polypropylène.

10. Composition moulable de matière plastique selon la revendication 8 ou 9, caractérisée en ce qu'elle contient

a) la matière plastique thermoplastique ou thermodurcissable,
b) ledit phosphonite,
c) un ester c1) de l'acide 3,3-bis-(3'-t-butyl-4'-hydroxyphényl)-butanoïque de formule III

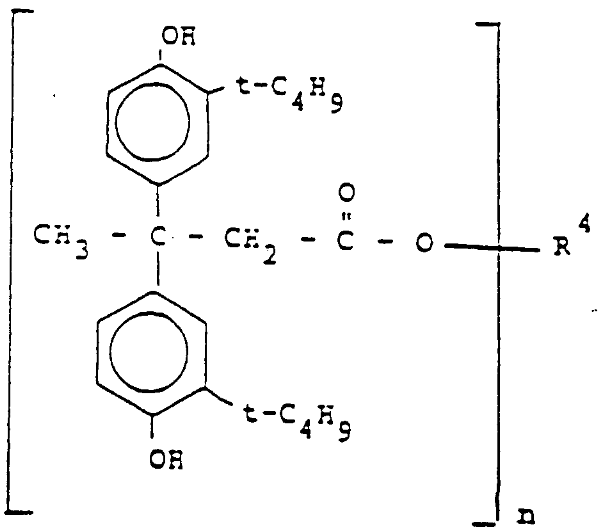

(III),

dans laquelle n est 1 ou 2 et $R^4$ représente un reste alkyle en $C_1$-$C_{12}$ lorsque n est 1, ou un reste alkylène en $C_1$-$C_{12}$ lorsque n est 2, ou c2) de l'acide $\beta$-(3,5-di-t-butyl-4-hydroxyphényl)propionique de formule IV

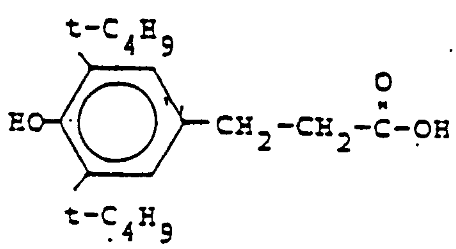

(IV)

avec un alcool mono- à tétrahydrique, dans un rapport a:b:c de (90 à 99,98):(0,01 à 5):(0,01 à 5) % en masse, de préférence de (98 à 99,95):(0,025 à 1):(0,025 à 1).

11. Composition moulable de matière plastique selon l'une ou plusieurs des revendications 8 à 10, caractérisée en ce qu'elle contient en outre des antioxydants, des absorbants d'UV, des stabilisants à la lumière, des désactivateurs de métaux, des composés détruisant les peroxydes, des costabilisants basiques, des agents de nucléation, des charges, des agents renforçants, des plastifiants, des lubrifiants, des émulsionnants, des pigments, des azurants optiques, des agents ignifuges, des agents antistatiques ou des agents gonflants.

12. Mode de réalisation selon l'une ou plusieurs des revendications 1 à 7, caractérisé en ce que, comme composés de formule V, entrent en considération ceux qui ne contiennent pas de groupe dialkylamino ni de pont A et qui ont donc la formule I

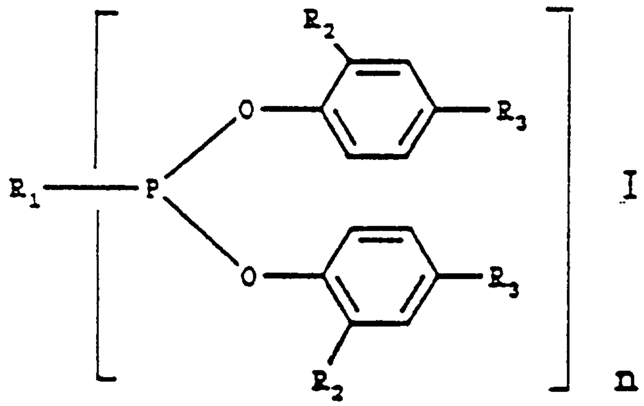

I

dans laquelle $R^1$, $R^2$, $R^3$ et n ont par ailleurs la signification indiquée.

**13.** Mode de réalisation selon l'une ou plusieurs des revendications 8 à 11, caractérisé en ce que, comme composés de formule V, entrent en considération les composés selon la revendication 12.

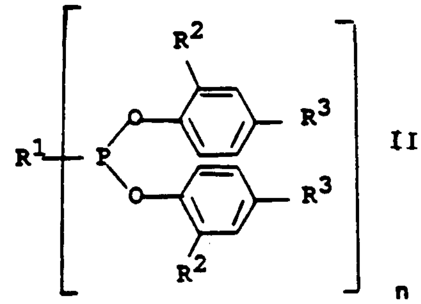

I)

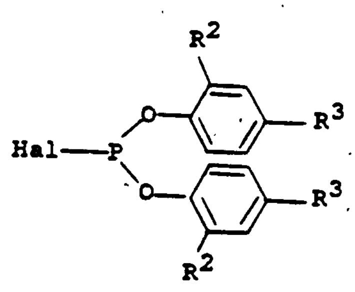

(II)

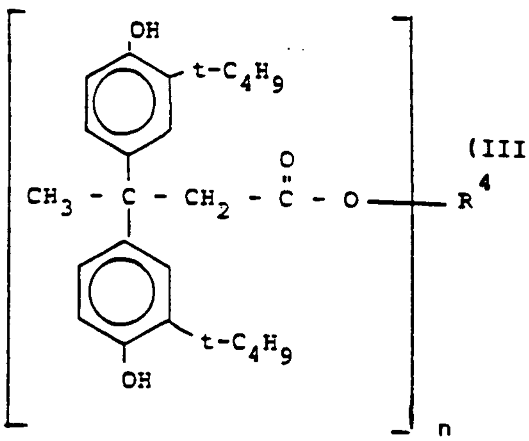

(III)

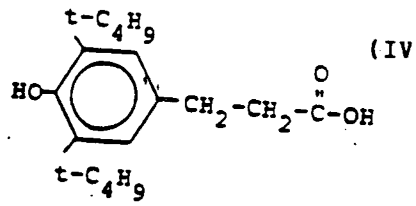

(IV)

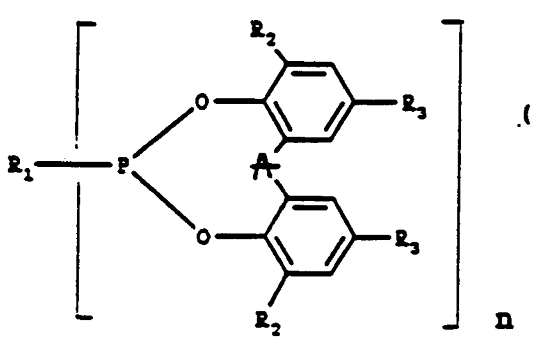

(V)

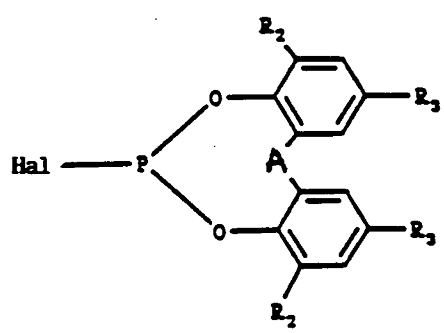

(VI)